(19) Europäisches Patentamt
European Patent Office
Office européen des brevets

(11) **EP 4 050 521 A1**

(12) **EUROPEAN PATENT APPLICATION**

(43) Date of publication:
**31.08.2022 Bulletin 2022/35**

(21) Application number: **21205756.6**

(22) Date of filing: **01.11.2021**

(51) International Patent Classification (IPC):
**G06N 3/04** *(2006.01)* **G06N 3/08** *(2006.01)*

(52) Cooperative Patent Classification (CPC):
**G06N 3/0454; G06N 3/084**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.02.2021 JP 2021029990**

(71) Applicant: **FUJITSU LIMITED**
**Kawasaki-shi, Kanagawa 211-8588 (JP)**

(72) Inventors:
• **SHIRAHATA, Koichi**
  **Kawasaki, 211-8588 (JP)**
• **MIWA, Masahiro**
  **Kawasaki, 211-8588 (JP)**

(74) Representative: **Haseltine Lake Kempner LLP**
**Cheapside House**
**138 Cheapside**
**London EC2V 6BJ (GB)**

(54) **MACHINE LEARNING PROGRAM, MACHINE LEARNING METHOD, AND INFORMATION PROCESSING DEVICE**

(57) A machine learning program that causes at least one computer to execute a process, the process includes, training a machine learning model by using a backpropagation process; skipping reading a first mini-batch in a first epoch among a plurality of mini-batches that are created by dividing training data.

FIG. 1

EP 4 050 521 A1

## Description

FIELD

The embodiments discussed herein are related to a machine learning program, a machine learning method, and an information processing device.

BACKGROUND

In deep learning, for example, machine learning is performed using the stochastic gradient descent (SGD) method. Hereinafter, machine learning is sometimes referred to as training.

For example, machine learning is performed by causing input data to be read in units of mini-batches and repeating each of a forward process, a backward process, and an update process in order until the precision specified by the user is satisfied or a specified number of epochs is reached.

Furthermore, as a machine learning approach, data parallel training in which training is performed in parallel using a plurality of processors is known. The data parallel training may be called data parallel learning.

In the data parallel training, for example, the input data is evenly divided by the number of processors, and the divided pieces of data are allocated separately to each processor. Each processor performs training using the allocated piece of input data. At this time, the forward and the backward are performed independently by each processor. Meanwhile, as for the update, the backward output of each processor is aggregated in one location, and the aggregated result (for example, an average value) is distributed to each processor. Usually, synchronization between all processors is needed at this time.

Japanese Laid-open Patent Publication No. 2018-190140, Japanese Laid-open Patent Publication No. 2018-18422, and International Publication Pamphlet No. WO 2020/008642 are disclosed as related art.

SUMMARY

[TECHNICAL PROBLEM]

However, in such a past SGD method, since all pieces of data are read in order in units of mini-batches in each epoch, training takes time.

In one aspect, the present embodiments aim to make it possible to shorten the time involved in machine learning.

[SOLUTION TO PROBLEM]

According to an aspect of the embodiments, a machine learning program that causes at least one computer to execute a process, the process includes, training a machine learning model by using a backpropagation process; skipping reading a first mini-batch in a first epoch among a plurality of mini-batches that are created by dividing training data.

[ADVANTAGIOUS EFFECTS OF INVENTION]

According to one embodiment, the time involved in machine learning may be shortened.

BRIEF DESCRIPTION OF DRAWINGS

Embodiments are set out, by way of example only, with reference to the following drawings, in which:

FIG. 1 is a diagram schematically illustrating a hardware configuration of an information processing system as an example of a first embodiment;
FIG. 2 is a diagram depicting a functional configuration of the information processing system as an example of the first embodiment;
FIG. 3 is a diagram depicting skip mini-batch information of mini-batch management information in the information processing system as an example of the first embodiment;
FIG. 4 is a diagram depicting a mini-batch reading process by a training execution unit in the information processing system as an example of the first embodiment;
FIG. 5 is a flowchart for explaining a process in the information processing system as an example of the first embodiment;
FIG. 6 is a diagram depicting a mini-batch reading process by a training execution unit in an information processing system as an example of a second embodiment;
FIG. 7 is a diagram for explaining an effect of training of a machine learning model performed by the information processing system as an example of the second embodiment;
FIG. 8 is a diagram for explaining an effect of training of a machine learning model performed by the information processing system as an example of the second embodiment;
FIG. 9 is a diagram for explaining an effect of training of a machine learning model performed by the information processing system as an example of the second embodiment;
FIG. 10 is a diagram for explaining an effect of training of a machine learning model performed by the information processing system as an example of the second embodiment;
FIG. 11 is a diagram depicting a functional configuration of an information processing system as an example of a third embodiment;
FIG. 12 is a diagram depicting a mini-batch reading process by a training execution unit in the information processing system as an example of the third embodiment;

FIG. 13 is a diagram for explaining an effect of training of a machine learning model performed by the information processing system as an example of the third embodiment;

FIG. 14 is a diagram for explaining an effect of training of a machine learning model performed by the information processing system as an example of the third embodiment;

FIG. 15 is a diagram for explaining an effect of training of a machine learning model performed by the information processing system as an example of the third embodiment;

FIG. 16 is a diagram for explaining an effect of training of a machine learning model performed by the information processing system as an example of the third embodiment;

FIG. 17 is a diagram depicting a functional configuration of an information processing system as an example of a fourth embodiment;

FIG. 18 is a diagram for explaining a method of designating the number of skip mini-batches by a training management unit in the information processing system as an example of the fourth embodiment;

FIG. 19 is a flowchart for explaining a process in the information processing system as an example of the fourth embodiment;

FIG. 20 is a diagram depicting a functional configuration of an information processing system as an example of a fifth embodiment;

FIG. 21 is a diagram for explaining a method of designating the skip target mini-batch by a mini-batch management unit in the information processing system as an example of the fifth embodiment;

FIG. 22 is a flowchart for explaining a process in the information processing system as an example of the fifth embodiment;

FIG. 23 is a diagram depicting a functional configuration of an information processing system as an example of a sixth embodiment;

FIG. 24 is a diagram for explaining mini-batch skip control by a mini-batch management unit in the information processing system as an example of the sixth embodiment; and

FIG. 25 is a diagram for explaining an effect of training of a machine learning model performed by the information processing system as an example of the sixth embodiment.

DESCRIPTION OF EMBODIMENTS

Hereinafter, embodiments relating to the present machine learning program and machine learning method will be described with reference to the drawings. Note that the embodiments to be described below are merely examples, and there is no intention to exclude application of various modifications and techniques not explicitly described in the embodiments. For example, the present embodiments may be implemented by making various modifications (for example, by combining the respective embodiments) without departing from the spirit of the present embodiments. Furthermore, each drawing is not intended to include only components illustrated in the drawings and may include another function and the like.

(I) First Embodiment

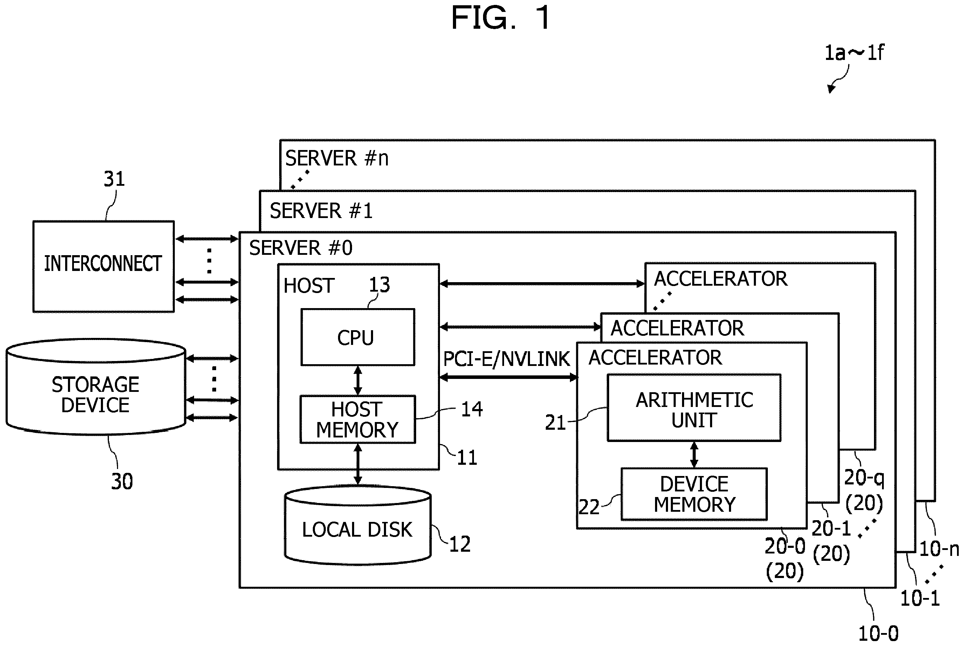

FIG. 1 is a diagram schematically illustrating a hardware configuration of an information processing system 1a as an example of a first embodiment.

The information processing system 1a of the present first embodiment achieves a machine learning function of training a machine learning model (performing machine learning) using training data.

The information processing system 1a includes, for example, a plurality of (n + 1 in the example illustrated in FIG. 1) servers 10-0 to 10-n and a storage device 30 as illustrated in FIG. 1. The symbol n denotes a natural number.

The servers 10-0 to 10-n are connected so as to be able to communicate with each other via an interconnect 31. The interconnect 31 is a communication path that connects between the servers 10-0 to 10-n and may be, for example, InfiniBand or Ethernet. InfiniBand and Ethernet are both registered trademarks.

Furthermore, the individual servers 10-0 to 10-n are each connected to the storage device 30 and are each able to read and write data on the storage device 30. The storage device 30 may have a parallel file system and may have, for example, Lustre or the general parallel file system (GPFS). Lustre and GPFS are both registered trademarks. The storage device 30 stores training data (mini-batch) used in machine learning.

In the storage device 30, redundant arrays of inexpensive disks (RAID) may be configured using a plurality of storage devices.

The servers 10-0 to 10-n are information processing devices having a server function. The server 10-0 is sometimes referred to as a server #0, and the server 10-1 is sometimes referred to as a server #1. Furthermore, the server 10-n is sometimes referred to as a server #n. In addition, when the servers 10-0 to 10-n are not particularly distinguished, the servers 10-0 to 10-n are denoted as servers 10.

Each server 10 has a similar hardware configuration. In the example illustrated in FIG. 1, the server 10 includes a host 11, a local disk 12, and a plurality of (q + 1 in the example illustrated in FIG. 1) accelerators 20-0 to 20-q. The symbol q denotes a natural number.

The host 11 includes a host memory 14 and one or more central processing units (CPUs) 13. The host memory 14 is a storage memory including a read only memory (ROM) and a random access memory (RAM). The RAM of the host memory 14 is used as a main storage device of the server 10. The RAM temporarily stores at least a part of an operating system (OS) program and a control program to be executed by the CPU 13. Furthermore, the host memory 14 stores various sorts of data needed for processing by the CPU 13.

The CPU 13 controls the entire server 10. The CPU 13 may be a multiprocessor or may be a multicore processor having a plurality of CPU cores. Hereinafter, the CPU 13 is sometimes referred to as a processor 13.

In the example illustrated in FIG. 1, for convenience, an example in which the n + 1 servers 10 each include one CPU 13 and the machine learning model is trained using these n + 1 CPUs 13 (processors) will be illustrated.

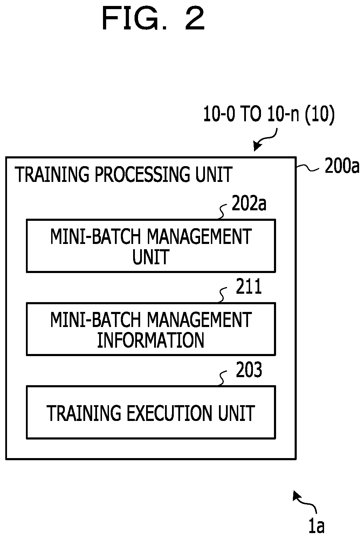

Then, when the CPU 13 of each server 10 executes the control program (a training program: not illustrated), a function as a training processing unit 200a depicted in FIG. 2 is achieved.

A program in which processing contents to be executed by the server 10 are described may be recorded in a variety of recording media. For example, the program to be executed by the server 10 may be stored in the local disk 12. The CPU 13 loads at least a part of the program in the local disk 12 into the host memory 14 and executes the loaded program.

Furthermore, the program to be executed by the server 10 (CPU 13) may also be recorded in a non-transitory portable recording medium such as an optical disk, a memory device, or a memory card (not illustrated).

The optical disk is a non-transitory portable recording medium having data recorded in a readable manner by reflection of light. Examples of the optical disk include a digital versatile disc (DVD), a DVD-RAM, a compact disc read only memory (CD-ROM), and a CD-recordable (R)/rewritable (RW). The memory device is, for example, a universal serial bus (USB) memory. The memory card is a card-type non-transitory recording medium.

The execution of the program stored in the portable recording medium is enabled after being installed in the local disk 12, for example, under the control of the CPU 13. Furthermore, the CPU 13 may also directly read and execute the program from the portable recording medium.

The host memory 14 is a storage memory including the read only memory (ROM) and the random access memory (RAM). The RAM of the host memory 14 is used as a main storage device of the server 10. The RAM temporarily stores at least a part of the OS program and the control program to be executed by the CPU 13. Furthermore, the host memory 14 stores various sorts of data needed for processing by the CPU 13.

The local disk 12 is a storage device such as a hard disk drive (HDD), a solid state drive (SSD), or a storage class memory (SCM) and stores various kinds of data. The local disk 12 is used as an auxiliary storage device of the server 10. The local disk 12 stores the OS program, the control program, and various sorts of data. Furthermore, the training data (mini-batch) may be stored in the local disk 12.

In addition, the local disk 12 may store various sorts of data generated when the training processing unit 200a executes each piece of processing.

The accelerators 20-0 to 20-q are hardware accelerators for complementing the performance of the CPU 13. Hereinafter, when the accelerators 20-0 to 20-q are not particularly distinguished, the accelerators 20-0 to 20-q are denoted as accelerators 20. The accelerator 20 may be, for example, a graphics accelerator.

The accelerator 20 includes an arithmetic unit 21 and a device memory 22. The arithmetic unit 21 is a processor (control unit) and controls the accelerator 20. The arithmetic unit 21 may be a multiprocessor. The arithmetic unit 21 may be, for example, any one of a CPU, a micro processing unit (MPU), a digital signal processor (DSP), an application specific integrated circuit (ASIC), a programmable logic device (PLD), and a field programmable gate array (FPGA). Furthermore, the arithmetic unit 21 may be a combination of two or more types of elements of the CPU, MPU, DSP, ASIC, PLD, and FPGA.

FIG. 2 is a diagram depicting a functional configuration of the information processing system 1a as an example of the first embodiment.

In this example illustrated in FIG. 2, each server 10 has a function as the training processing unit 200a. For example, in the information processing system 1a of the present first embodiment, data parallel training is achieved by dividing input data (training data) and using the divided input data to train a machine learning model in each of the plurality of servers 10. The data parallel training may be called distributed learning or distributed training.

The training processing unit 200a achieves a training process in machine learning using the training data. For example, the server 10 functions as a training device that trains the machine learning model by the training processing unit 200a.

The training processing unit 200a may train the machine learning model using, for example, training data (teacher data) to which a correct answer label is attached. The training processing unit 200a trains the machine learning model using the training data and generates a trained machine learning model. In the example indicated below, an example in which the training processing unit 200a performs machine learning using the SGD method will be illustrated.

The machine learning model may be, for example, a deep learning model (deep neural network). The neural network may be a hardware circuit, or may be a virtual network by software connecting between layers virtually constructed on a computer program by the CPU 13 or the like.

As illustrated in FIG. 2, the training processing unit 200a includes a mini-batch management unit 202a and a training execution unit 203.

The mini-batch management unit 202a manages a mini-batch used by the training execution unit 203, which will be described later, to train the machine learning model.

In the information processing system 1a of the present first embodiment, an example in which machine learning is performed using p mini-batches created by dividing the training data into p pieces will be illustrated. These p mini-batches may be called a data set. Furthermore, the p mini-batches are sometimes represented as mini-batches #1 to #p.

The training execution unit 203, which will be described later, trains the machine learning model using the mini-batches #1 to #p in one epoch. Then, such training using the mini-batches #1 to #p is repeatedly performed until a prescribed number of times (m) is reached. It can be said that m denotes the maximum number of epochs.

The mini-batch management unit 202a manages, for example, the reading order of a plurality of mini-batches in the training of the machine learning model by the training execution unit 203, for each epoch.

The mini-batch management unit 202a manages the mini-batches using mini-batch management information 211.

In the mini-batch management information 211, for example, information representing the order of reading by the training execution unit 203 is associated with information that identifies the mini-batches, for each epoch. The mini-batch management unit 202a may manage the index of each mini-batch.

Furthermore, the mini-batch management unit 202a achieves a skip mini-batch selection function of selecting a mini-batch (skip mini-batch) for which reading by the training execution unit 203 is to be skipped, from among a plurality of mini-batches.

The mini-batch management unit 202a selects a skip mini-batch for which reading by the training execution unit 203 is to be skipped, from the p mini-batches #1 to #p used for training the machine learning model in one epoch. The mini-batch management unit 202a selects the skip mini-batch for each epoch.

The mini-batch management unit 202a manages the selected skip mini-batch using the mini-batch management information 211. For example, in the mini-batch management information 211, information indicating whether or not the mini-batch is a skip mini-batch is set in each mini-batch for each epoch.

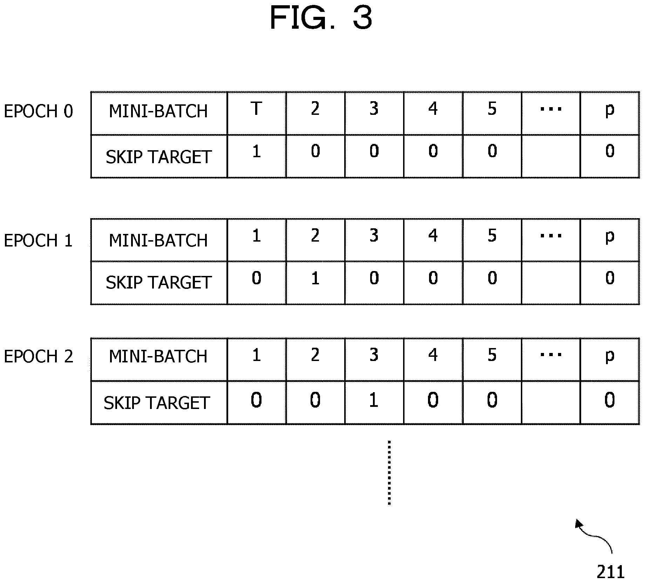

FIG. 3 is a diagram depicting skip mini-batch information of the mini-batch management information 211 in the information processing system 1a as an example of the first embodiment.

In this mini-batch management information 211 depicted in FIG. 3, information indicating whether or not the mini-batch is a skip target is associated with information that identifies the mini-batch (a mini-batch number: a natural number from 1 to p in the example illustrated in FIG. 3), for each epoch. The information indicating whether or not the mini-batch is a skip target is sometimes referred to as skip mini-batch information. Furthermore, the number of mini-batches to be skipped in one epoch is sometimes referred to as the number of skip mini-batches. FIG. 3 illustrates an example in which the number of skip mini-batches in each epoch is one.

Note that, in the skip mini-batch information depicted in FIG. 3, "1" in the skip target indicates being a skip mini-batch, and "0" in the skip target indicates not being a skip mini-batch. In addition, as the default value of the skip mini-batch information in the mini-batch management information 211, 0 representing not being a skip mini-batch may be set.

The mini-batch management unit 202a designates the skip target mini-batch for each epoch and sets the skip mini-batch information in the mini-batch management information 211.

It is desirable for the mini-batch management unit 202a to set the skip mini-batch such that every mini-batch is read at least once in a period from the epoch 0 to the epoch m.

In the example illustrated in FIG. 3, the mini-batch number of a mini-batch to be assigned as a skip mini-batch is incremented (shifted) each time the epoch advances by one. This assigns a mini-batch with a mini-batch number greater by one as a new skip mini-batch each time the epoch advances by one.

For example, information constituting the mini-batch management information 211 is stored in a predetermined storage area of the host memory 14, the local disk 12, or the like.

Note that the present first embodiment illustrates an example in which one mini-batch is skipped in one epoch, but is not limited to this example. For example, two or more mini-batches may be skipped in one epoch, and various modifications may be made and implemented.

The training execution unit 203 reads a plurality of mini-batches created by dividing the training data and implements training on the machine learning model.

In the present first embodiment, an example in which the p mini-batches #1 to #p created by dividing the training data into p pieces are used will be illustrated. These p mini-batches may be called a data set. Note that the size of the mini-batch may be set as appropriate based on the know-how of machine learning.

The training execution unit 203 trains the machine learning model using the mini-batches #1 to #p in one epoch and repeatedly performs such training until a prescribed number of times (number of epochs) is reached.

The training execution unit 203 trains the machine learning model by repeating each of a forward process, a backward process, and an update process in order until the precision specified by the user is satisfied or a specified number of epochs is reached.

The training execution unit 203 refers to the mini-batch management information 211 created by the mini-batch management unit 202a to acquire and read the mini-batch and uses the read mini-batch to train the machine learning model.

At this time, the training execution unit 203 skips reading a mini-batch (skip mini-batch) set to be a skip target in the mini-batch management information 211 and does not use that mini-batch to train the machine learning model.

For the mini-batch that is skipped in this manner, a series of the forward, backward, and update processes in machine learning are also skipped.

In each epoch, the training execution unit 203 sequentially acquires and reads the processing target mini-batches based on the information registered in the mini-batch management information 211 and trains the machine learning model. Furthermore, at this time, the training execution unit 203 determines whether or not the processing target mini-batch is a skip target and, when the processing target mini-batch is a skip target, suppresses reading the mini-batch (skip mini-batch).

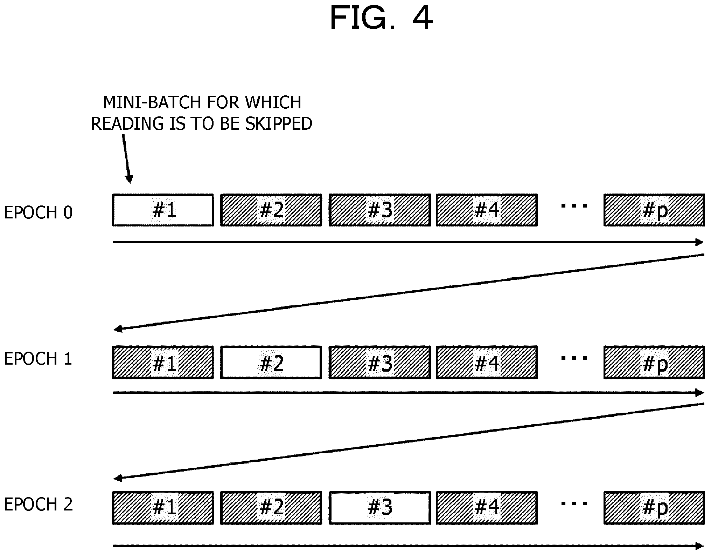

FIG. 4 is a diagram depicting a mini-batch reading process by the training execution unit 203 in the information processing system 1a as an example of the first embodiment.

This FIG. 4 illustrates an example in which the training execution unit 203 reads the mini-batches in accordance with the mini-batch management information 211 depicted in FIG. 3.

In FIG. 4, the white squares indicate the mini-batches (skip mini-batches) for which reading by the training execution unit 203 is to be skipped, and the squares illustrated with hatched diagonal lines indicate the mini-batches to be read by the training execution unit 203.

In the epoch 0, the mini-batch #1 is assigned as a skip mini-batch, and the training execution unit 203 skips reading this mini-batch #1 and sequentially reads the mini-batches #2 to #p to train the machine learning model.

In the epoch 1, the mini-batch #2 is assigned as a skip mini-batch, and the training execution unit 203 skips reading the mini-batch #2 after reading the mini-batch #1 and sequentially reads the mini-batches #3 to #p to train the machine learning model.

In the epoch 2, the mini-batch #3 is assigned as a skip mini-batch, and the training execution unit 203 skips reading the mini-batch #3 after reading the mini-batches #1 and #2 and sequentially reads the mini-batches #4 to #p to train the machine learning model.

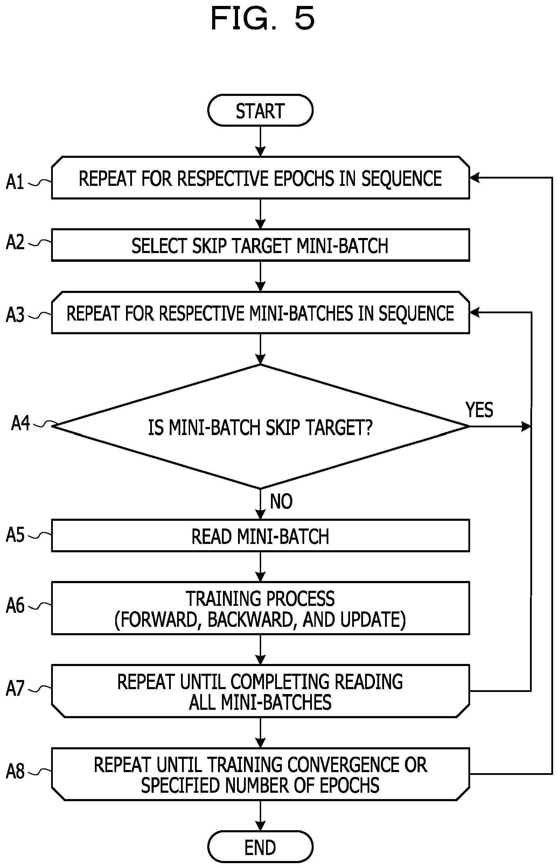

A process in the information processing system 1a as an example of the first embodiment configured as described above will be described with reference to the flowchart (steps A1 to A8) illustrated in FIG. 5.

In step A1, a loop process in which control up to step A7 is repeatedly implemented for all epochs up until the maximum number of epochs is started.

In step A2, the mini-batch management unit 202a selects a skip target mini-batch for the epoch from among a plurality of mini-batches constituting the data set. Then, the mini-batch management unit 202a sets the skip mini-batch with 1 indicating being a skip target, as the skip mini-batch information in the mini-batch management information 211.

In step A3, a loop process in which control up to step A6 is repeatedly implemented is started for all the mini-batches. The training execution unit 203 refers to the mini-batch management information 211 to select one mini-batch to be assigned as a processing target, from among unprocessed mini-batches.

In step A4, the training execution unit 203 refers to the mini-batch management information 211 to confirm whether or not the processing target mini-batch is a skip target mini-batch. As a result of the confirmation, when the processing target mini-batch is a skip mini-batch (refer to the YES route in step A4), the process returns to step A3.

On the other hand, as a result of the confirmation, when the processing target mini-batch is not a skip mini-batch (refer to the NO route in step A4), the process proceeds to step A5.

In step A5, the training execution unit 203 reads the processing target mini-batch and, in step A6, implements training (the forward, backward, and update) on the machine learning model.

In step A7, a loop end process relevant to step A3 is implemented. Here, when processing for all the mini-batches constituting the data set is finished, the control advances to step A8.

In step A8, a loop end process relevant to step A1 is implemented. Here, when processing for all epochs is finished, the process ends.

As described above, according to the information processing system 1a as an example of the first embodiment, in machine learning using SGD, the training execution unit 203 skips reading a mini-batch for which the fact that the mini-batch is a skip target is set in the skip mini-batch information, in each epoch. This makes it possible to reduce the amount of input data read by the training execution unit 203 and to shorten the time imposed for training the machine learning model. For example, the time involved until converging the training by SGD may be shortened.

The mini-batch management unit 202a sets the skip mini-batch such that every mini-batch is read at least once in a period from the epoch 0 to the epoch m. Furthermore, the data set is read repeatedly for each epoch. Therefore, even if reading is partially skipped in a certain epoch, the skipped mini-batch is not unread at all during training, but is read in another epoch. Accordingly, even if the reading of some mini-batches is skipped in an epoch, the influence on the training effect is small, and all pieces of data do not need to be read in all the epochs.

Furthermore, in the past approach, in order to raise the average amount of information (entropy), there is a case where the data set is shuffled for each epoch such that pieces of data in each mini-batch are read in a different order for each epoch. However, the shuffle process itself takes time, especially in such large-scale machine learning as using a plurality of processors.

In the present information processing system 1a, by skipping reading a part of data (mini-batches) for each epoch, a change is made in the reading order of the data for each epoch and the average amount of information may be raised. Therefore, an effect close to the effect of shuffling may also be obtained without performing shuffling.

(II) Second Embodiment

An information processing system 1b as an example of the present second embodiment is assumed to have a hardware configuration similar to the hardware configuration of the information processing system 1a of the first embodiment depicted in FIG. 1.

In the information processing system 1b of the present second embodiment, a plurality of servers 10 each achieve a function as the training processing unit 200a depicted in FIG. 2.

For example, in the information processing system 1b of the present second embodiment as well, as in the first embodiment, by partially skipping reading the mini-batch in each epoch in machine learning using the SGD method in each server 10, the amount of read input data is reduced.

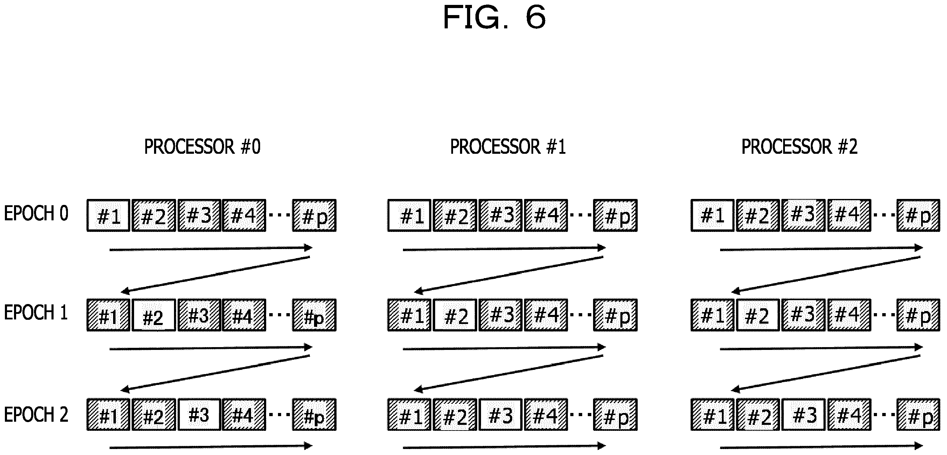

FIG. 6 is a diagram depicting a mini-batch reading process by a training execution unit 203 in the information processing system 1b as an example of the second embodiment.

As described above, in the information processing system 1b depicted in FIG. 1, each server 10 includes one CPU 13 (processor 13) for convenience. Hereinafter, the individual CPUs 13 included in the servers #0, #1 and #2 are sometimes referred to as processors #0, #1 and #2, respectively.

FIG. 6 illustrates the mini-batch reading process in the processors #0 to #2 among the plurality of processors 13. Furthermore, FIG. 6 illustrates an example in which the number of skip mini-batches is equally assigned as one for all epochs in each of the processors #0 to #2.

As illustrated in this FIG. 6, in the information processing system 1b of the present second embodiment, each of the processors #0 to #2 individually reads and skips the mini-batch based on mini-batch management information 211 illustrated in FIG. 3.

Thus, in the information processing system 1b as an example of the present second embodiment, in distributed learning using the plurality of processors 13, each processor 13 reads the mini-batch and skips the skip target mini-batch in each epoch at the same timing.

This allows the information processing system 1b of the present second embodiment to obtain actions and effects similar to the actions and effects of the first embodiment. Moreover, since each processor 13 reads the mini-batch and skips the skip mini-batch at the same timing in each epoch, in the update process of distributed learning using the plurality of processors 13, the occurrence of delay due to waiting for the synchronization between the plurality of processors 13 may be suppressed. Accordingly, the time imposed for training the machine learning model may be shortened, and the time involved until converging the training by SGD may be shortened.

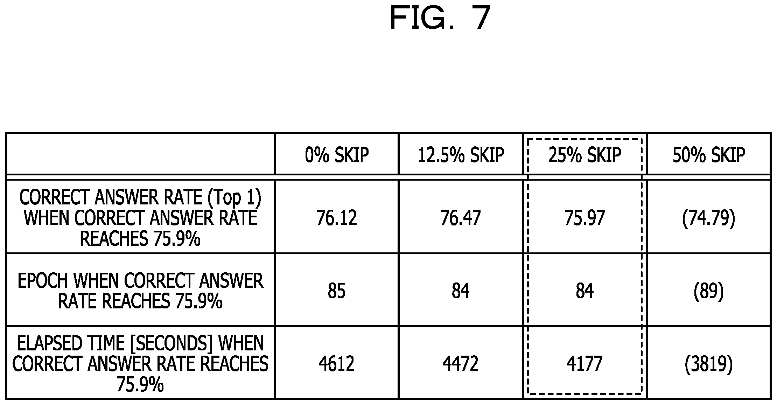

FIGs. 7 to 10 are each a diagram for explaining an effect of training of a machine learning model performed by the information processing system 1b as an example of the second embodiment.

These FIGs. 7 to 10 depict simulation results in the case of application to the training of a machine learning model that classifies ImageNet images using ResNet-50 v1.5.

This simulation was performed under the conditions of Advanced Industrial Science and Technology (AIST) Artificial Intelligence Bridging Cloud Infrastructure (ABCI)'s 8-node 32 GPUs (which are 32 processors), PyTorch, FP32/FP16 mixed precision, and no data rotation between the processors for each epoch.

In FIG. 7, a correct answer rate (Top 1) when the correct answer rate reaches 75.9%, an epoch when the correct answer rate reaches 75.9%, and an elapsed time (seconds) when the correct answer rate reaches 75.9% are illustrated as a table by comparing a case where no mini-batch is skipped (0%) and individual cases where the mini-batch is skipped at respective proportions (percentages) of 12.5%, 25%, and 50%.

As illustrated in this FIG. 7, when the reading of the mini-batch in each epoch is reduced by, for example, 25%, the time involved until reaching a correct answer rate of 75.9% may be reduced by 10.4% compared to the case where the mini-batch is not skipped (= 1 - 4612 seconds/4177 seconds).

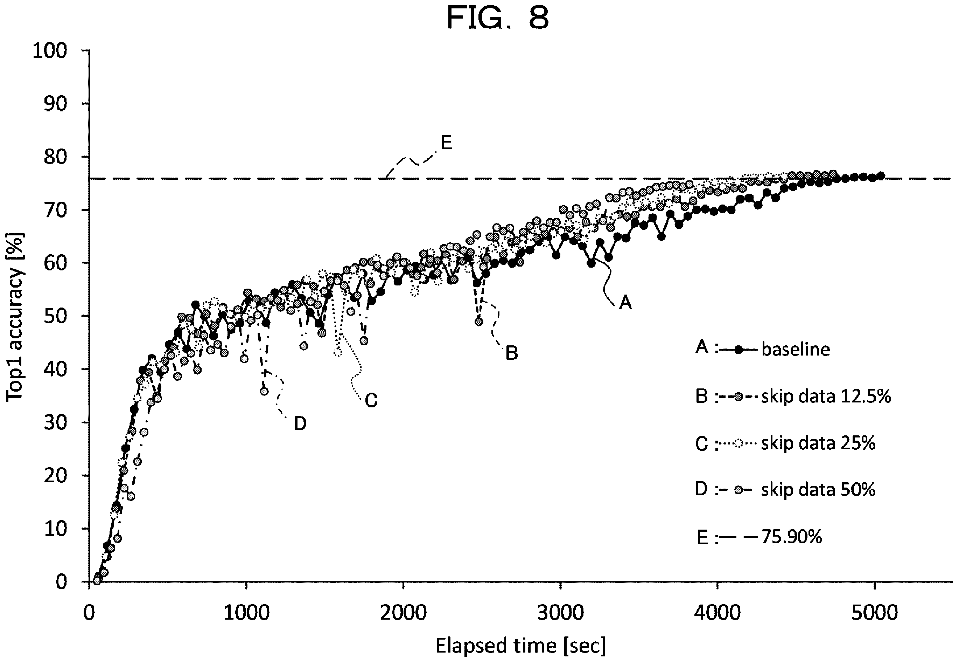

In FIG. 8, a relationship between the correct answer rate (Top 1 accuracy) and the execution time (Elapsed time) is represented as a graph for each of a case where no mini-batch is skipped (baseline) and individual cases where the mini-batch is skipped at respective proportions of 12.5%, 25%, and 50%.

In this FIG. 8, it can be seen that, by skipping the reading of the mini-batch, the elapsed time until the correct answer rate reaches 75.9% is made shorter than the elapsed time in the case where no mini-batch is skipped (baseline: refer to the reference sign A in FIG. 8). Furthermore, it can also be seen that the higher the skip rate, the shorter the elapsed time until the correct answer rate reaches 75.9% (refer to the reference sign E in FIG. 8).

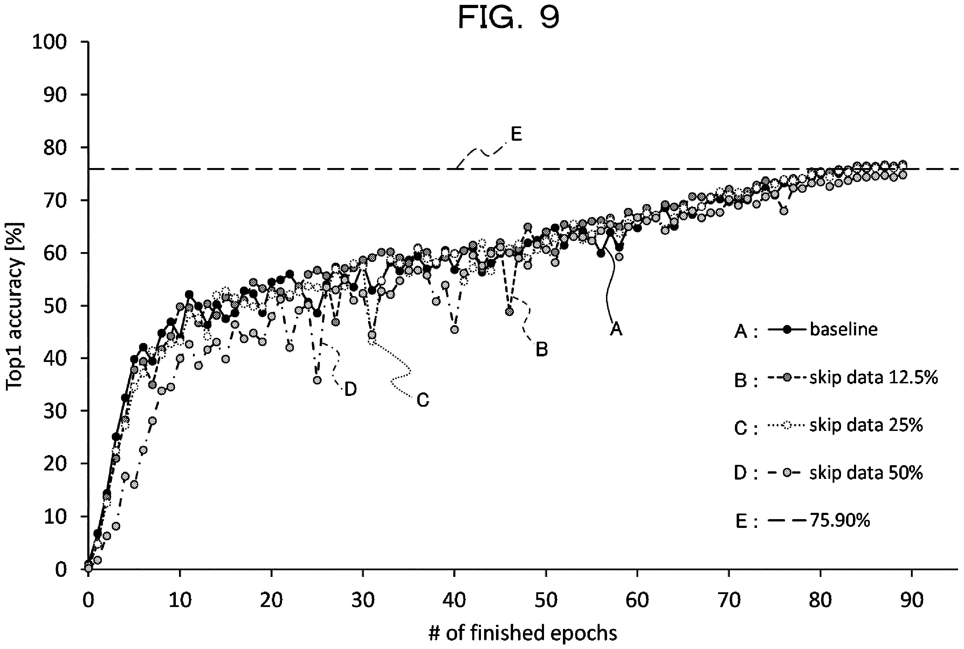

In FIG. 9, a relationship between the number of finished epochs (# of finished epochs) and the correct answer rate (Top 1 accuracy) is represented as a graph for each of a case where no mini-batch is skipped (baseline) and individual cases where the mini-batch is skipped at respective proportions of 12.5%, 25%, and 50%.

In this FIG. 9, it can be seen that, in each of the cases of skipping at respective proportions of 12.5% and 25%, a correct answer rate close to the correct answer rate in the case where no mini-batch is skipped (baseline) is obtained.

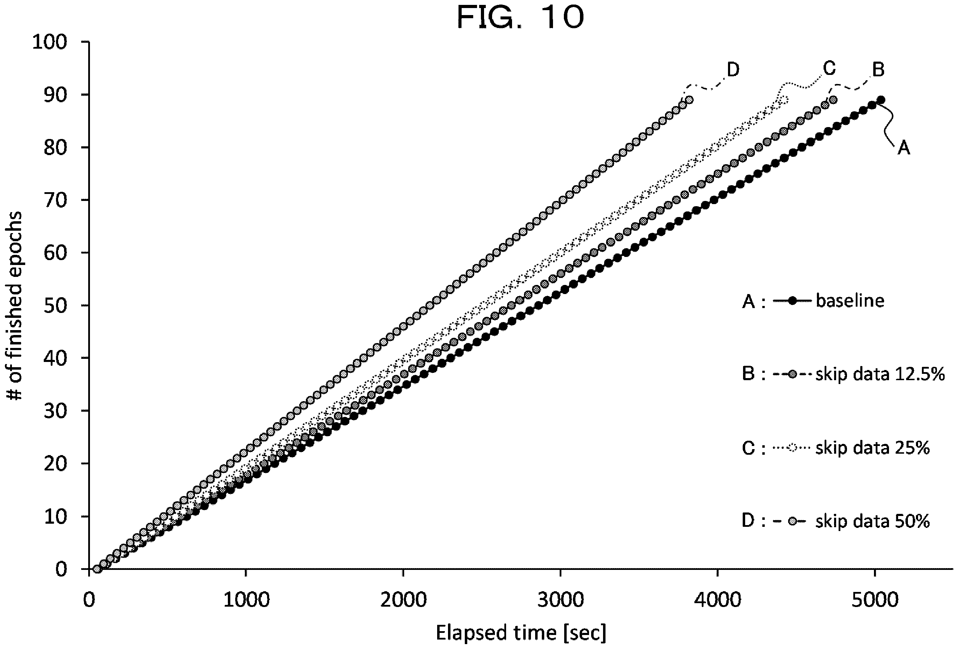

In FIG. 10, a relationship between the execution time (Elapsed time) and the number of finished epochs (# of finished epochs) is represented as a graph for each of a case where no mini-batch is skipped (baseline) and individual cases where the mini-batch is skipped at respective proportions of 12.5%, 25%, and 50%.

In this FIG. 10, it can be seen that, as the proportion for skipping the reading of the mini-batch is increased, the elapsed time until the same number of finished epochs is reached becomes shorter.

(III) Third Embodiment

In the second embodiment described above, in distributed training using the plurality of processors 13, an example in which the number of skip mini-batches in each epoch is the same has been indicated, but the number of skip mini-batches is not limited to this example. The number of skip mini-batches may be altered depending on epochs. In the present third embodiment, an example in which the number of skip mini-batches in the epoch is changed will be illustrated.

In an information processing system 1c of the present third embodiment as well, as in the first embodiment, by partially skipping reading the mini-batch in each epoch in machine learning using the SGD method, the amount of read input data is reduced.

Furthermore, the information processing system 1c of the present third embodiment is also assumed to have a hardware configuration similar to the hardware configuration of the information processing system 1a of the first embodiment depicted in FIG. 1.

In the information processing system 1c of the present third embodiment, a server 10-0 functions as a primary (master) among servers 10-0 to 10-n. The server 10-0 may be called a master server 10-0. Furthermore, the servers 10-0 to 10-n function as secondaries (slaves). The server 10-0 achieves a function as a master server and a function as a slave server. Hereinafter, the servers 10-0 to 10-n may be called slave servers 10-0 to 10-n.

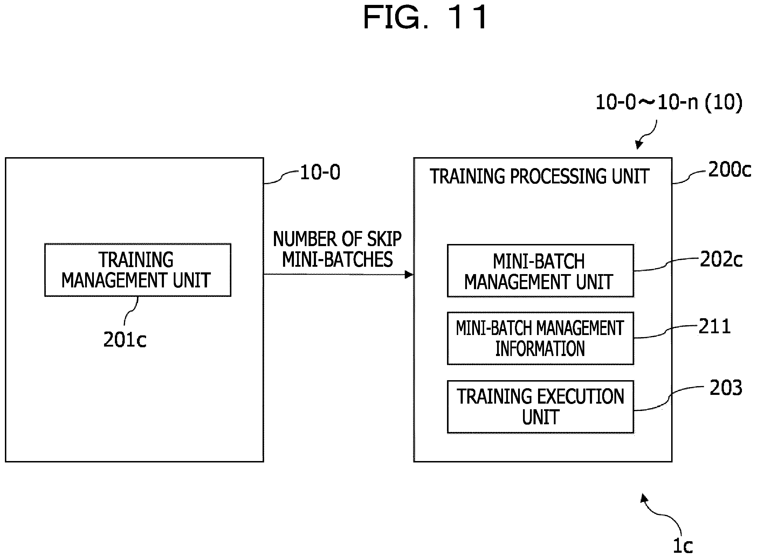

Then, when the CPU 13 of the master server 10-0 executes a master control program (a master training program: not illustrated), a function as a training management unit 201c depicted in FIG. 11 is achieved. Furthermore, when the respective CPUs 13 of the slave servers 10-0 to 10-n execute a slave control program (a slave training program: not illustrated), functions as a training processing unit 200c depicted in FIG. 11 are individually achieved.

FIG. 11 is a diagram depicting a functional configuration of the information processing system 1c as an example of the third embodiment.

As illustrated in this FIG. 11, the master server 10-0 achieves the function as the training management unit 201c, and the slave servers 10-0 to 10-n each achieve the function as the training processing unit 200c.

Hereinafter, in the drawing, similar parts to the aforementioned parts are denoted by the same reference signs as those of the aforementioned parts, and thus detailed description thereof will be omitted.

The training management unit 201c manages data parallel training of the machine learning models by the processors 13 included in the plurality of slave servers 10. For example, the training management unit 201c controls to synchronize the reading of each mini-batch by the plurality of processors 13.

For example, the training management unit 201c may notify each processor 13 of an instruction such that the plurality of processors 13 skip the mini-batch at the same timing.

For example, the training management unit 201c manages the progress status of training of the machine learning model in each processor 13 and notifies each processor 13 of the timing for skipping the mini-batch and the number of skip mini-batches. The training management unit 201c notifies each processor 13 of the number of skip mini-batches for each epoch.

The training management unit 201c notifies the training processing unit 200c of the processor 13 of each slave server 10 of the number of skips for each epoch. The notification of the number of skips to the processor 13 may be made before the start of training of the machine learning model in each processor 13, or alternatively, may be made successively according to the progress of training of the machine learning model in each processor 13, such as before the start of each epoch.

The training processing unit 200c achieves a training process in machine learning using the training data. For example, the slave servers 10-0 to 10-n function as training devices that train the machine learning model by the functions as the training processing unit 200c.

The training processing unit 200c may achieve the training process in machine learning using the training data (teacher data) to which a correct answer label is attached, similarly to the training processing unit 200a of the information processing system 1a of the first embodiment.

As illustrated in FIG. 11, the training processing unit 200c includes a mini-batch management unit 202c and a training execution unit 203.

The mini-batch management unit 202c manages a mini-batch used by the training execution unit 203 to train the machine learning model.

In the information processing system 1c of the present third embodiment as well, an example in which machine learning is performed using p mini-batches #1 to #p created by dividing the training data into p pieces will be illustrated.

The mini-batch management unit 202c manages, for example, the order of a plurality of mini-batches used by the training execution unit 203 to train the machine learning model for each epoch.

The mini-batch management unit 202c designates the skip target mini-batch for each epoch according to the number of skip mini-batches for each epoch notified from the training management unit 201c. The mini-batch management unit 202c sets the skip target mini-batch such that every mini-batch is read at least once in a period from the epoch 0 to the epoch m.

The mini-batch management unit 202c also manages the mini-batches using mini-batch management information 211, similarly to the mini-batch management unit 202a of the first embodiment.

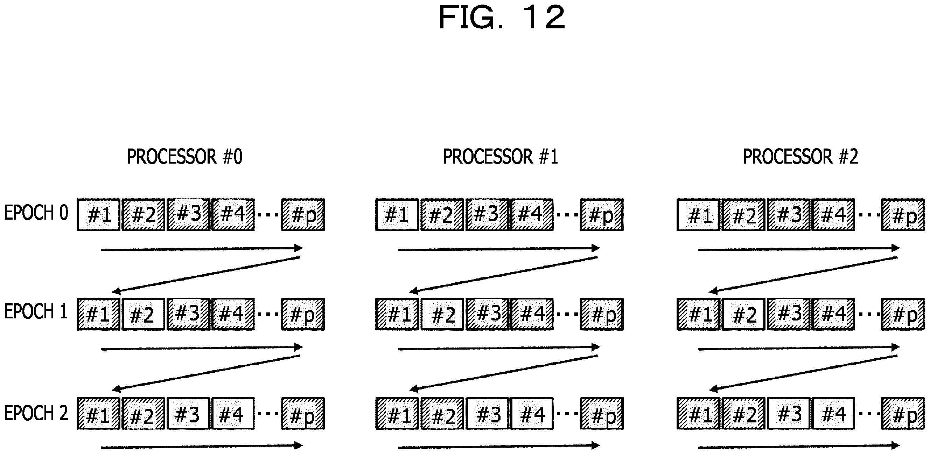

FIG. 12 is a diagram depicting a mini-batch reading process by the training execution unit 203 in the information processing system 1c as an example of the third embodiment.

In FIG. 12, the white squares indicate the skip mini-batches, and the squares illustrated with hatched diagonal lines indicate the mini-batches to be read by the training execution unit 203.

In the example illustrated in FIG. 12, the reading of the mini-batches in epochs 0 to 2 by processors #0 to #2 is illustrated.

It is assumed that the training management unit 201c has notified the training processing unit 200c of the number of skip mini-batches as one for the epoch 0 and epoch 1 and of the number of skip mini-batches as two for the epoch 2.

The mini-batch management unit 202c sets the skip target mini-batch such that every mini-batch is read at least once in a period from the epoch 0 to the epoch m. Then, in the example illustrated in FIG. 12, the mini-batch number of a mini-batch to be assigned as a skip mini-batch is incremented (shifted) each time the epoch advances by one. This assigns a mini-batch with a mini-batch number greater by one as a new skip mini-batch each time the epoch advances by one.

In the epoch 0, the mini-batch #1 is assigned as a skip mini-batch, and the training execution unit 203 skips reading this mini-batch #1 and sequentially reads the mini-batches #2 to #p to train the machine learning model.

In the epoch 1, the mini-batch #2 is assigned as a skip mini-batch, and the training execution unit 203 skips reading the mini-batch #2 after reading the mini-batch #1 and sequentially reads the mini-batches #3 to #p to train the machine learning model.

In the epoch 2, the mini-batches #3 and #4 are assigned as skip mini-batches, and the training execution unit 203 skips reading the mini-batches #3 and #4 after reading the mini-batches #1 and #2 and sequentially reads the mini-batches #5 to #p to train the machine learning model.

The training execution unit 203 trains the machine learning model by repeating each of the forward process, the backward process, and the update process in sequence until the precision specified by the user is satisfied or a specified number of epochs is reached.

The training execution unit 203 of each slave server 10 may aggregate the output of the backward in machine learning by notifying the master server 10-0. In the master server 10-0, the result of the aggregation (for example, an average value) is distributed separately to the processor 13 of each slave server 10.

According to the information processing system 1c as an example of the third embodiment, actions and effects similar to the actions and effects of the second embodiment may be obtained. Furthermore, even when the number of skip mini-batches is altered for each epoch, each server 10 reads the mini-batch and skips the skip target mini-batch at the same timing in each epoch. Thus, in the update process of distributed learning using the plurality of processors 13, the occurrence of synchronization waiting or the like is not provoked between the plurality of processors 13. Accordingly, the time imposed for training the machine learning model may be shortened, and the time involved until converging the training by SGD may be shortened.

The training management unit 201c notifies each of the plurality of training processing units 200c of the number of skip mini-batches for each epoch and controls to synchronize the reading of each mini-batch by the plurality of processors 13. This allows the mini-batch to be skipped at a timing when the plurality of processors 13 is synchronized.

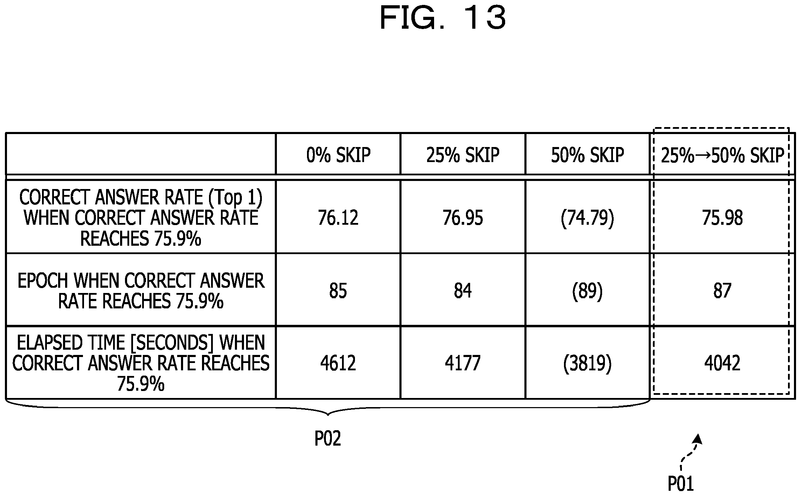

FIGs. 13 to 16 are each a diagram for explaining an effect of training of a machine learning model performed by the information processing system 1c as an example of the third embodiment.

These FIGs. 13 to 16 also depict simulation results in the case of application to the training of a machine learning model that classifies ImageNet images using ResNet-50 v1.5, similarly to the simulation results depicted in FIGs. 7 to 10 for the second embodiment.

In FIG. 13, a correct answer rate (Top 1) when the correct answer rate reaches 75.9%, an epoch when the correct answer rate reaches 75.9%, and an elapsed time (seconds) when the correct answer rate reaches 75.9% are illustrated for a case where the reading of the mini-batch in each epoch is reduced by 25% from the epoch 0 to the epoch 44 and reduced by 50% from the epoch 45 to the epoch 89 (refer to the reference sign P01 in FIG. 13).

Furthermore, in this FIG. 13, for comparison, a correct answer rate (Top 1) when the correct answer rate reaches 75.9%, an epoch when the correct answer rate reaches 75.9%, and an elapsed time (seconds) when the correct answer rate reaches 75.9% are also illustrated for a case where no mini-batch is skipped (0% skip) and individual cases where the mini-batch is skipped at respective proportions (percentages) of 25% and 50% (25% skip and 50% skip) (refer to the reference sign P02 in FIG. 13).

This example illustrated in FIG. 13 indicates that, when a reduction by 25% is made from the epoch 0 to the epoch 44 and a reduction by 50% is made from the epoch 45 to the epoch 89 (25% to 50% skip), a reduction by 12.4% in the time involved until reaching a correct answer rate of 75.9% was enabled (= 1 - 4042 seconds/4612 seconds) compared to the case where the mini-batch is not skipped (0% skip).

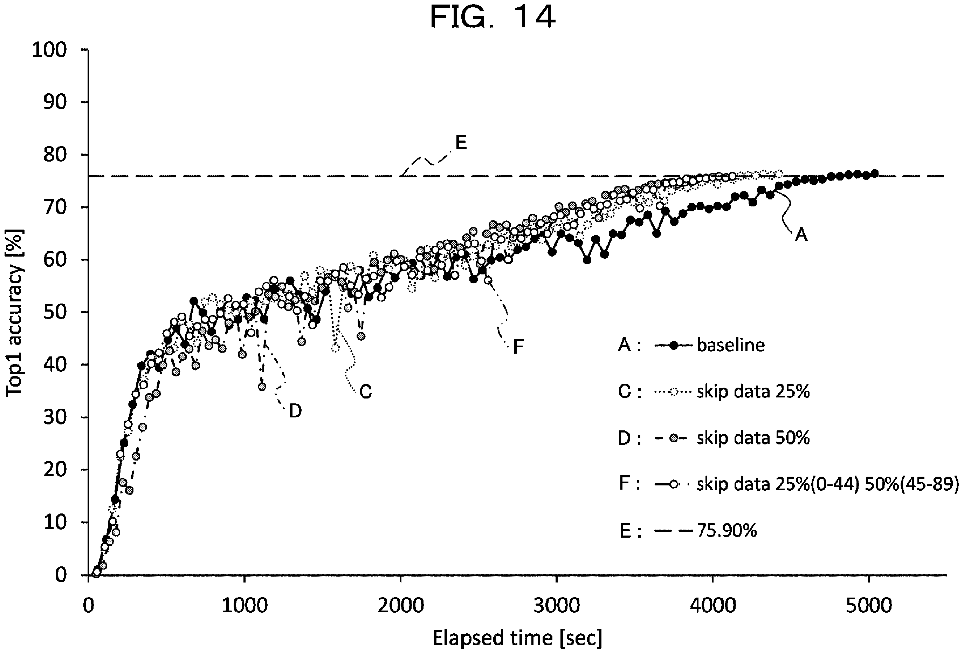

In FIG. 14, a relationship between the correct answer rate (Top 1 accuracy) and the execution time (Elapsed time) in a case where the reading of the mini-batch in each epoch is reduced by 25% from the epoch 0 to the epoch 44 and reduced by 50% from the epoch 45 to the epoch 89 {skip data 25% (0-44) 50% (45-89)} is represented as a graph (refer to the reference sign F in FIG. 14).

Furthermore, in FIG. 14, for comparison, graphs in a case where no mini-batch is skipped (baseline) and individual cases where the mini-batch is skipped at respective proportions of 25% and 50% are also separately represented (refer to the reference signs A, C, and D in FIG. 14).

In this FIG. 14, it can be seen that, by reducing the reading of the mini-batch by 25% in each epoch from the epoch 0 to the epoch 44 and reducing the reading of the mini-batch by 50% in each epoch from the epoch 45 to the epoch 89 (refer to the reference sign F in FIG. 14), the elapsed time until reaching a correct answer rate of 75.9% (refer to the reference sign E in FIG. 14) becomes shorter than the case of skipping at a proportion of 25% (skip data 25%: refer to the reference sign C in FIG. 14).

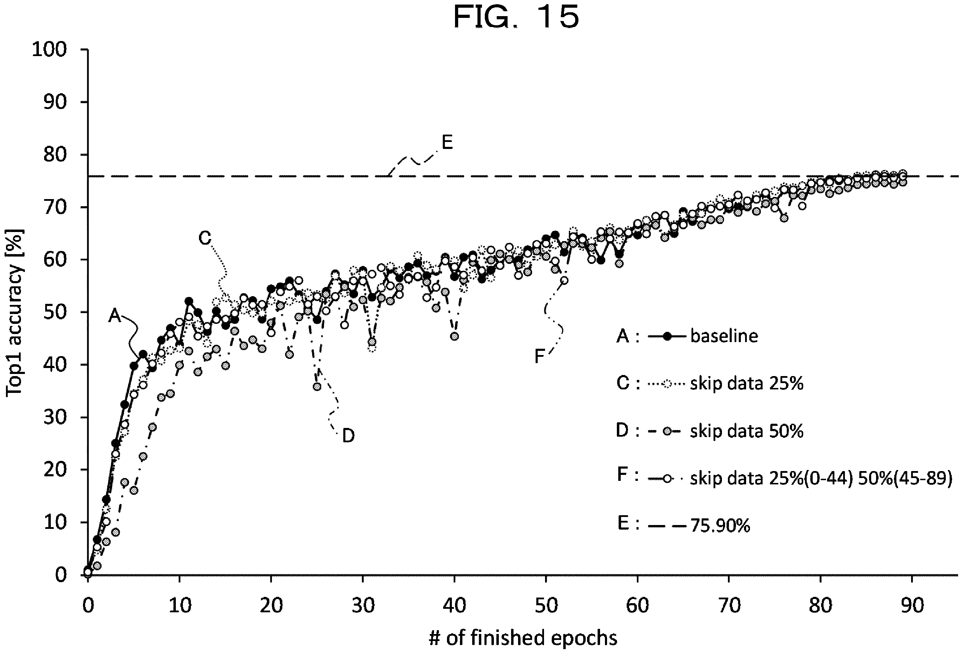

In FIG. 15, a relationship between the number of finished epochs (# of finished epochs) and the correct answer rate (Top 1 accuracy) in a case where the reading of the mini-batch in each epoch is reduced by 25% from the epoch 0 to the epoch 44 and reduced by 50% from the epoch 45 to the epoch 89 {skip data 25% (0-44) 50% (45-89)} is represented as a graph (refer to the reference sign F in FIG. 15).

Furthermore, in FIG. 15, for comparison, graphs in a case where no mini-batch is skipped (baseline) and individual cases where the mini-batch is skipped at respective proportions of 25% and 50% are also separately represented (refer to the reference signs A, C, and D in FIG. 15).

In this FIG. 15, it can be seen that a correct answer rate close to the correct answer rate in the case where no mini-batch is skipped (baseline: refer to the reference sign A in FIG. 15) is obtained also in the case where the reading of the mini-batch in each epoch is reduced by 25% from the epoch 0 to the epoch 44 and reduced by 50% from the epoch 45 to the epoch 89 (refer to the reference sign F in FIG. 15).

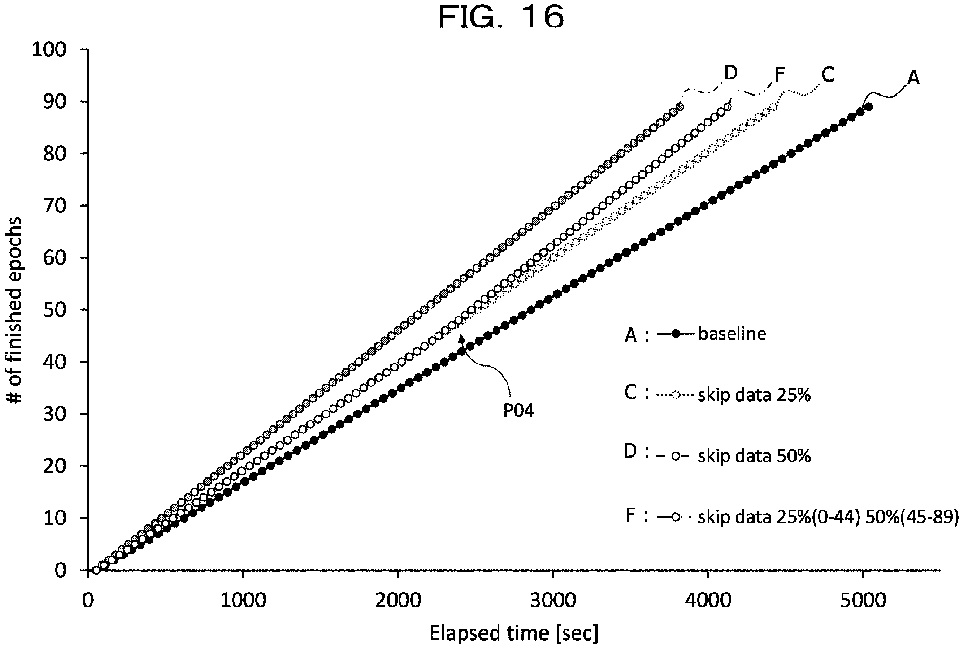

In FIG. 16, a relationship between the execution time (Elapsed time) and the number of finished epochs (# of finished epochs) in a case where the reading of the mini-batch in each epoch is reduced by 25% from the epoch 0 to the epoch 44 and reduced by 50% from the epoch 45 to the epoch 89 is represented as a graph {skip data 25% (0-44) 50% (45-89): refer to the reference sign F in FIG. 16}.

Furthermore, in FIG. 16, for comparison, graphs in a case where no mini-batch is skipped (baseline) and individual cases where the mini-batch is skipped at respective proportions of 25% and 50% are also separately represented (refer to the reference signs A, C, and D in FIG. 16).

In this FIG. 16, it can be seen that, in the case represented by the reference sign F where the reading of the mini-batch in each epoch is reduced by 25% from the epoch 0 to the epoch 44 and reduced by 50% from the epoch 45 to the epoch 89, the gradient of the graph is changed at the epoch 45 as a boundary (refer to the reference sign P04 in FIG. 16).

For example, the section from the epoch 0 to the epoch 44 has the same gradient as in the case of skipping at a proportion of 25% (refer to the reference sign C in FIG. 16), and the section from the epoch 45 to the epoch 89 has the same gradient as in the case of skipping at a proportion of 50% (refer to the reference sign D in FIG. 16).

(IV) Fourth Embodiment

In the present fourth embodiment, in distributed training using a plurality of processors 13, when there is a difference in the processing speed between the respective processors 13, the skip of reading the mini-batch is controlled such that the processing amount is balanced between the respective processors 13.

An information processing system 1d of the present fourth embodiment is also assumed to have a hardware configuration similar to the hardware configuration of the information processing system 1a of the first embodiment depicted in FIG. 1.

In the information processing system 1d of the present fourth embodiment as well, a server 10-0 functions as a primary (master) among servers 10-0 to 10-n. Furthermore, the servers 10-0 to 10-n function as secondaries (slaves).

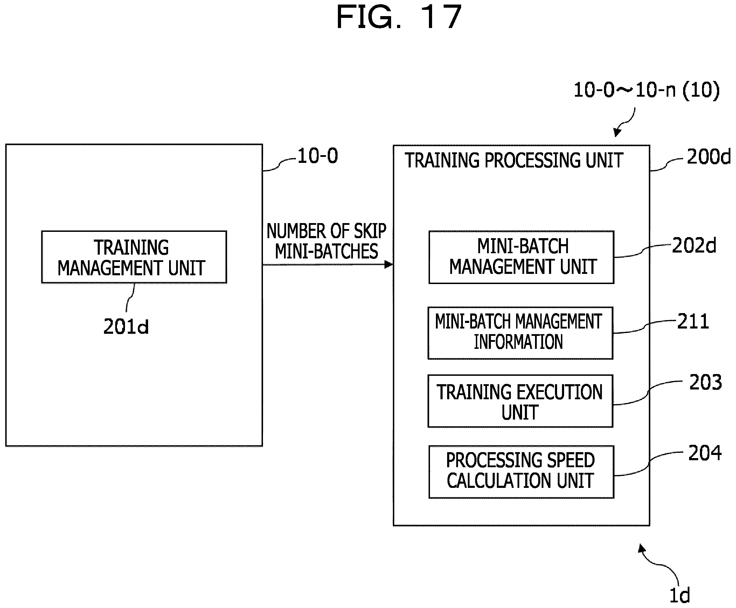

Then, when the CPU 13 of the master server 10-0 executes a master control program (a master training program: not illustrated), a function as a training management unit 201d depicted in FIG. 17 is achieved. Furthermore, when the respective CPUs 13 of the slave servers 10-0 to 10-n execute a slave control program (a slave training program: not illustrated), functions as a training processing unit 200d depicted in FIG. 17 are individually achieved.

FIG. 17 is a diagram depicting a functional configuration of the information processing system 1d as an example of the fourth embodiment.

As illustrated in this FIG. 17, the master server 10-0 achieves the function as the training management unit 201d, and the slave servers 10-0 to 10-n each achieve the function as the training processing unit 200d.

The training management unit 201d manages data parallel training of the machine learning models by the plurality of slave servers 10. For example, the training management unit 201d controls to synchronize the reading of each mini-batch by the plurality of slave servers 10.

When there is a difference in the processing speed of the CPU (processor) 13 between the slave servers 10, the training management unit 201d sets the number of skip mini-batches such that the processing amount in reading the mini-batch in each processor 13 is balanced between the respective processors 13.

The training management unit 201d is notified of information indicating the processing speed of each processor 13 from a processing speed calculation unit 204 of each slave server 10, which is described later.

The training management unit 201d has a monitoring function of comparing the processing speeds of the respective processors 13 notified from the processing speed calculation unit 204 of each slave server 10 and monitoring whether or not the difference in the processing speed between the processors 13 is equal to or greater than a predetermined threshold value. For example, the training management unit 201d determines whether or not a difference between the maximum value and the minimum value of the processing speeds of the plurality of processors 13 is equal to or greater than the predetermined threshold value.

Furthermore, when the preceding epoch has a difference in the processing speed between the plurality of processors 13 equal to or greater than the threshold value, the training management unit 201d simulates the throughput (the processing amount per unit time) of the present information processing system 1d in a case where a processor 13 having the slowest processing speed is removed (not used for machine learning). This is because removing the processor 13 having the slowest processing speed enhances the throughput in some cases due to a decrease in the synchronization waiting time between the plurality of processors 13.

When the throughput (the processing amount per unit time) is enhanced when the processor 13 having the slowest processing speed is removed, the training management unit 201d sets the number of skip mini-batches such that a processor 13 having a slower processing speed skips a greater number of mini-batches in order to balance the processing amount between the plurality of processors 13. For example, the load on the processor 13 having a slow processing speed is lessened.

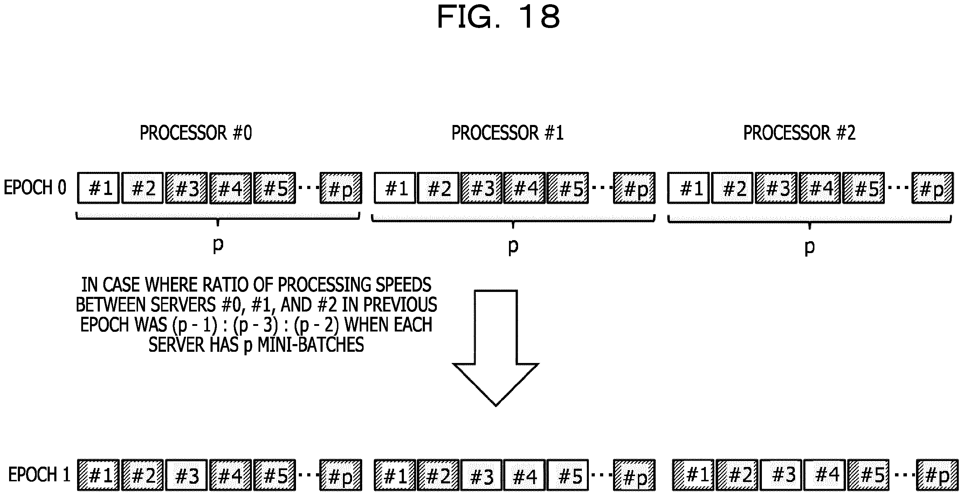

FIG. 18 is a diagram for explaining a method of designating the number of skip mini-batches by the training management unit 201d in the information processing system 1d as an example of the fourth embodiment.

In this example illustrated in FIG. 18, an example in a case where processors #0 to #2 each have p mini-batches and the ratio of the processing speeds between the processor #0, the processor #1, and the processor #2 in the epoch 0 is (p - 1) : (p - 3) : (p - 2) is illustrated. Note that the number of skip mini-batches is equal for the respective processors #0, #1, and #2 in the epoch 0 and is all assigned as two.

In such a case, the training management unit 201d sets the number of skip mini-batches for the individual processors #0, #1, and #2 in the epoch 1 as 1, 3, and 2, respectively.

For example, the training management unit 201d individually sets a greater number of skip mini-batches for a processor 13 having a lower processing speed and a smaller number of skip mini-batches for a processor 13 having a higher processing speed, according to the ratio of the processing speeds between the respective processors 13 in the previous epoch. This allows the mini-batch processing amounts of the respective processors 13 to be balanced between the plurality of processors 13 having a processing speed difference.

The training processing unit 200d achieves a training process in machine learning using the training data. For example, each slave server 10 functions as a training device that trains the machine learning model by the function as the training processing unit 200d.

The training processing unit 200d may achieve the training process in machine learning using the training data (teacher data) to which a correct answer label is attached, similarly to the training processing unit 200a of the information processing system 1a of the first embodiment.

As illustrated in FIG. 17, the training processing unit 200d includes a mini-batch management unit 202d, the processing speed calculation unit 204, and a training execution unit 203.

The processing speed calculation unit 204 calculates the processing speed of the CPU 13 (own CPU 13) that executes this processing speed calculation unit 204 and notifies the training management unit 201d of the calculated processing speed. For example, the processing speed calculation unit 204 calculates the processing speed of the own CPU 13 each time one epoch ends and notifies the training management unit 201d of the calculated processing speed.

In the information processing system 1d of the present fourth embodiment, each server 10 has, for example, a thermal throttling function that lowers the CPU temperature by bringing the clock frequency down when the temperature of the CPU 13 rises. The processing speed of the CPU 13 is greatly affected by the clock frequency.

The processing speed calculation unit 204 may use the clock frequency of the own CPU 13 to convert the clock frequency into the processing speed of the own CPU 13. Furthermore, the processing speed calculation unit 204 may use the value of the clock frequency of the own CPU 13 as it is as the processing speed of the own CPU 13.

The processing speed calculation unit 204 notifies the training management unit 201d of the calculated processing speed of the own CPU 13.

The mini-batch management unit 202d manages a mini-batch used by the training execution unit 203 to train the machine learning model.

The mini-batch management unit 202d designates the skip target mini-batch for each epoch according to the number of skip mini-batches for each epoch notified from the training management unit 201d. The mini-batch management unit 202d sets the skip target mini-batch such that every mini-batch is read at least once in a period from the epoch 0 to the epoch m.

The mini-batch management unit 202d also manages the mini-batches using mini-batch management information 211, similarly to the mini-batch management unit 202a of the first embodiment.

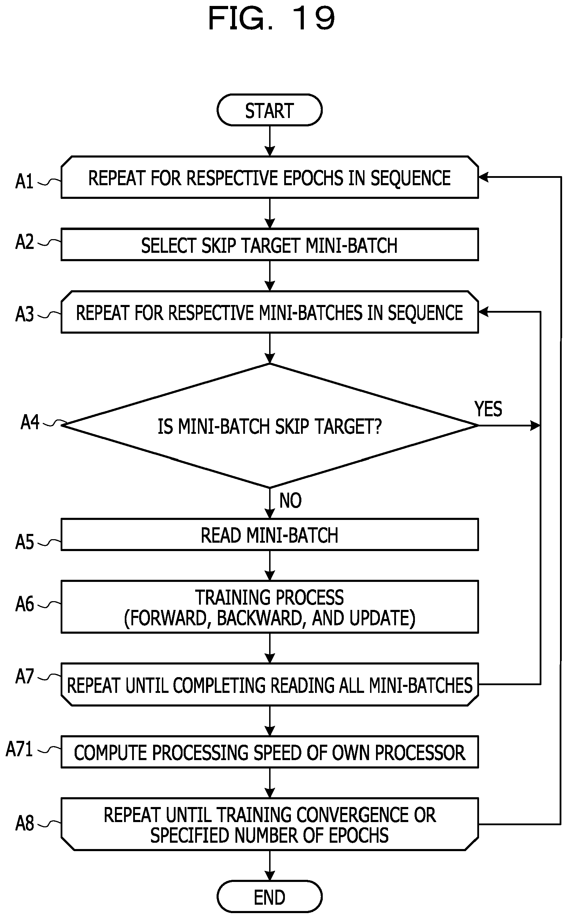

A process in the information processing system 1d as an example of the fourth embodiment configured as described above will be described with reference to the flowchart (steps A1 to A7, A71, and A8) illustrated in FIG. 19.

Note that, hereinafter, in the drawing, similar processes to the aforementioned processes are denoted by the same reference signs as those of the aforementioned steps, and thus detailed description thereof will be omitted.

In the flowchart illustrated in FIG. 19, step A71 is provided following step A7 of the flowchart depicted in FIG. 5.

In step A71, the processing speed calculation unit 204 calculates the processing speed of the own CPU 13 (own processor). The processing speed calculation unit 204 notifies the training management unit 201d of the calculated processing speed of the own CPU 13.

The training management unit 201d sets the number of skip mini-batches in the subsequent epoch for each processor 13 according to the ratio of the processing speeds between the respective processors 13 based on the processing speed calculation notified from each server 10. Thereafter, the process proceeds to step A8.

According to the information processing system 1d as an example of the fourth embodiment, actions and effects similar to the actions and effects of the first embodiment may be obtained.

Furthermore, according to the information processing system 1d as an example of the fourth embodiment, when there is a processing speed difference between the plurality of processors 13, the training management unit 201d sets the number of skip mini-batches such that a processor 13 having a slower processing speed skips a greater number of mini-batches in order to balance the processing amount between the plurality of processors 13.

This makes the processing performance of the plurality of processors 13 uniform and shortens the waiting time for synchronization, thereby allowing the time imposed for training the machine learning model in the present information processing system 1d to be shortened. For example, the time involved until converging the training by SGD may be shortened.

(V) Fifth Embodiment

In the present fifth embodiment, in distributed training using a plurality of processors 13, the skip of reading the mini-batch is controlled such that the processing amount is balanced between the respective processors 13 based on the learning efficiency of each processor 13.

An information processing system 1e of the present fifth embodiment is also assumed to have a hardware configuration similar to the hardware configuration of the information processing system 1a of the first embodiment depicted in FIG. 1.

In the information processing system 1e of the present fifth embodiment as well, a server 10-0 functions as a primary (master) among servers 10-0 to 10-n. Furthermore, the servers 10-0 to 10-n function as secondaries (slaves).

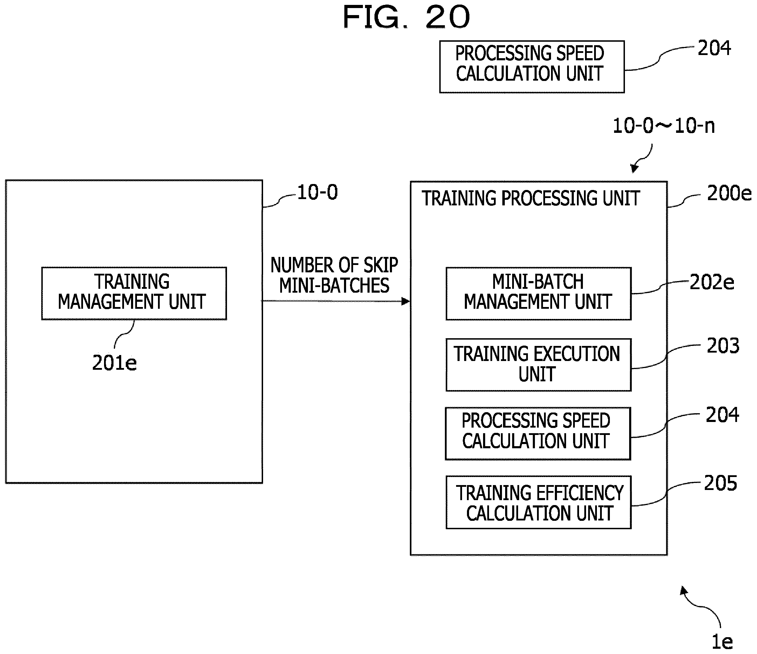

Then, when the CPU 13 of the master server 10-0 executes a master control program (a master training program: not illustrated), a function as a training management unit 201e depicted in FIG. 20 is achieved. Furthermore, when the CPUs 13 of the slave servers 10-0 to 10-n execute a slave control program (a slave training program: not illustrated), functions as a training processing unit 200e depicted in FIG. 20 are achieved.

FIG. 20 is a diagram depicting a functional configuration of the information processing system 1e as an example of the fifth embodiment.

As illustrated in this FIG. 20, the master server 10-0 achieves the function as the training management unit 201e, and the slave servers 10-0 to 10-n each achieve the function as the training processing unit 200e.

The training management unit 201e manages data parallel training of the machine learning models by a plurality of processors 13. For example, the training management unit 201e controls to synchronize the reading of each mini-batch by the plurality of processors 13.

When there is no difference in the processing speed between the processors 13, the training management unit 201e equalizes the number of skip mini-batches (makes the number of skip mini-batches equal) for each processor 13.

The training management unit 201e is notified of information indicating the processing speed of each processor 13 from a processing speed calculation unit 204 of each slave server 10, which is described later.

The training management unit 201e has a monitoring function of comparing the processing speeds of the respective processors 13 notified from each processing speed calculation unit 204 and monitoring whether or not the difference in the processing speed between the processors 13 is less than a predetermined threshold value. For example, the training management unit 201d determines whether or not a difference between the maximum value and the minimum value of the processing speeds of the plurality of processors 13 is less than the predetermined threshold value.

Furthermore, the training management unit 201e makes the number of skip mini-batches equal in each processor 13 when the preceding epoch has a difference in the processing speed between the plurality of processors 13 less than the threshold value.

Furthermore, similarly to the training management unit 201d in the fourth embodiment, the training management unit 201e may balance the processing amount between the plurality of processors 13 when the preceding epoch has a difference in the processing speed between the plurality of processors 13 equal to or greater than the threshold value. For example, the number of skip mini-batches may be set such that a processor 13 having a slower processing speed skips a greater number of mini-batches.

The training processing unit 200e achieves a training process in machine learning using the training data. For example, each slave server 10 individually functions as a training device that trains the machine learning model by the function as the training processing unit 200e.

The training processing unit 200e may achieve the training process in machine learning using the training data (teacher data) to which a correct answer label is attached, similarly to the training processing unit 200a of the information processing system 1a of the first embodiment.

As illustrated in FIG. 20, the training processing unit 200e includes a mini-batch management unit 202e, a training execution unit 203, the processing speed calculation unit 204, and a training efficiency calculation unit 205.

The training efficiency calculation unit 205 computes the training efficiency (learning efficiency) of the machine learning model at each end of training in the epoch. For the training efficiency, for example, the magnitude of the norm of the weight error gradient vector may be used. A mini-batch with a large norm of the weight error gradient vector is considered to contribute significantly to the training of the machine learning model and can be said to affect the training efficiency. The norm of the weight error gradient vector may be called the degree of training influence or the degree of training contribution of the machine learning model. The norm of the weight error gradient vector in the mini-batch corresponds to the difference in loss between the inference result and the correct answer of each mini-batch.

The training efficiency calculation unit 205 calculates the magnitude of the norm of the weight error gradient vector (the degree of training influence on machine learning) for each of a plurality of mini-batches processed in a first epoch among a plurality of epochs.

The training efficiency calculation unit 205 calculates the norm of the weight error gradient vector each time the training execution unit 203 trains the machine learning model using the mini-batch and stores the calculated norm in a predetermined storage area of the host memory 14, the local disk 12, or the like.

Furthermore, the training efficiency calculation unit 205 calculates the difference in loss (the norm of the weight error gradient vector) for each of the plurality of mini-batches sequentially used to train the machine learning model in each epoch. The training efficiency calculation unit 205 stores the difference in loss of each mini-batch for each epoch in a predetermined storage area of the host memory 14, the local disk 12, or the like.

The mini-batch management unit 202e manages a mini-batch used by the training execution unit 203 to train the machine learning model.

The mini-batch management unit 202e skips reading some mini-batches that have small influence on the training efficiency in the following epoch, based on the training efficiency of the training of the machine learning model in each processor 13.

The mini-batch management unit 202e preferentially sets a mini-batch with a low training efficiency (a small norm of the weight error gradient vector) in the preceding epoch, as a mini-batch to be skipped. For example, the mini-batch management unit 202e selects a number of mini-batches corresponding to the number of skip mini-batches notified from the training management unit 201e in order from a mini-batch with the lowest training efficiency in the preceding epoch to set the selected mini-batches as skip mini-batches. In mini-batch management information 211, the mini-batch management unit 202e sets the skip mini-batch with information indicating being a skip target, for each epoch.

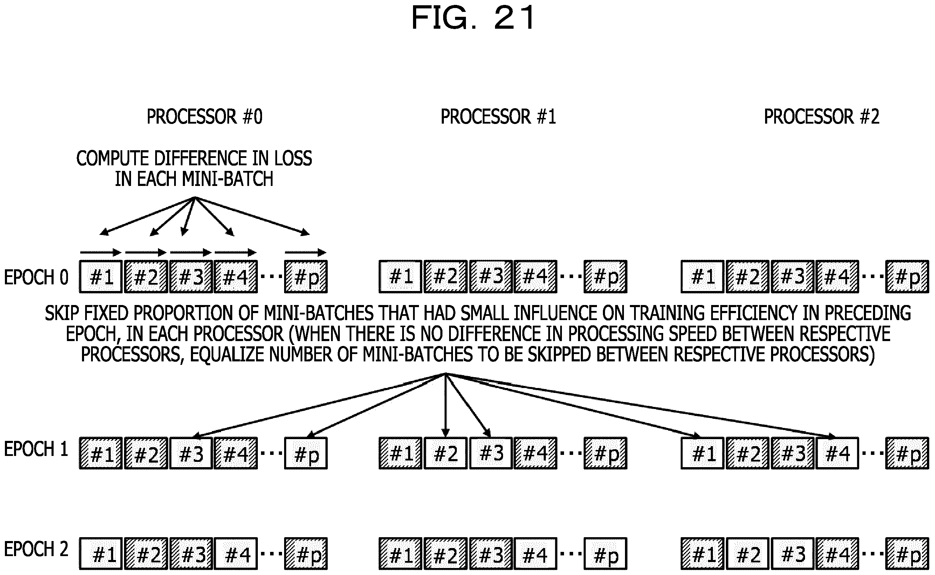

FIG. 21 is a diagram for explaining a method of designating the skip mini-batch by the mini-batch management unit 202e in the information processing system 1e as an example of the fifth embodiment.

In this FIG. 21, an example in which processors #0 to #2 each process p mini-batches is illustrated.

In the example illustrated in FIG. 21, for example, it is assumed that the loss of the mini-batches #2 and #3 is the minimum in the epoch 0 of the server #2.

In such a case, the mini-batch management unit 202e sets these mini-batches #2 and #3 as skip mini-batches in the epoch 1.

At this time, it is desirable for the mini-batch management unit 202e not to assign a mini-batch for which reading was skipped in the preceding epoch as a skip mini-batch in the subsequent epoch.

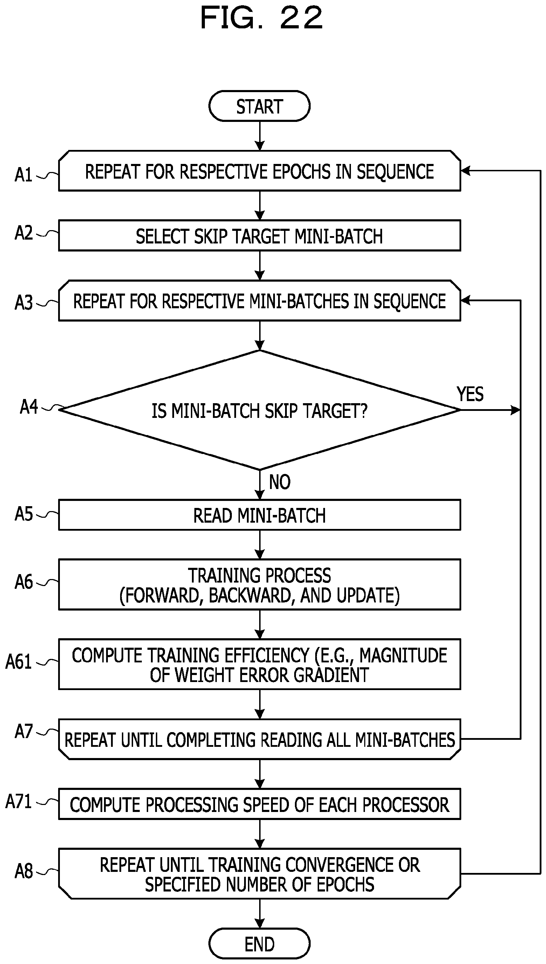

A process in the information processing system 1e as an example of the fifth embodiment configured as described above will be described with reference to the flowchart (steps A1 to A6, A61, A7, A71, and A8) illustrated in FIG. 22.

Note that, hereinafter, in the drawing, similar processes to the aforementioned processes are denoted by the same reference signs as those of the aforementioned steps, and thus detailed description thereof will be omitted.

In the flowchart illustrated in FIG. 22, step A61 is provided following step A6 of the flowchart depicted in FIG. 19.

In step A61, the training efficiency calculation unit 205 computes the training efficiency (learning efficiency) of the machine learning model.

The mini-batch management unit 202e selects a number of mini-batches corresponding to the number of skip mini-batches notified from the training management unit 201e in order from a mini-batch with the lowest training efficiency to set the selected mini-batches as mini-batches to be skipped. In the mini-batch management information 211, the mini-batch management unit 202e sets the skip mini-batch with information indicating being a skip target, for each epoch. Thereafter, the process proceeds to step A7.

As described above, according to the information processing system 1e as an example of the fifth embodiment, a mini-batch with a low learning efficiency (a small norm of the weight error gradient vector) in the prior epoch is preferentially set as a skip mini-batch. This allows an efficient update of weights in the training of the machine learning model.

(VI) Sixth Embodiment

In the present sixth embodiment, in distributed training using a plurality of servers 10, the reading of the mini-batch in some epochs by some servers 10 is skipped based on the learning efficiency of each server 10.

An information processing system 1f of the present sixth embodiment is also assumed to have a hardware configuration similar to the hardware configuration of the information processing system 1a of the first embodiment depicted in FIG. 1.

In the information processing system 1f of the present sixth embodiment as well, a server 10-0 functions as a primary (master) among servers 10-0 to 10-n. Furthermore, the servers 10-0 to 10-n function as secondaries (slaves).

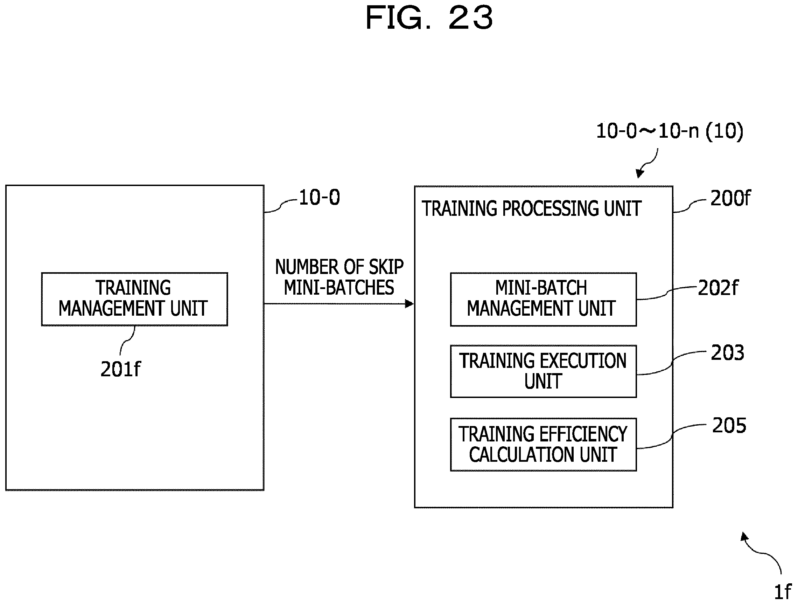

Then, when a CPU 13 of the master server 10-0 executes a master control program (a master training program: not illustrated), a function as a training management unit 201f depicted in FIG. 23 is achieved. Furthermore, when the CPUs 13 of the slave servers 10-0 to 10-n execute a slave control program (a slave training program: not illustrated), functions as a training processing unit 200f depicted in FIG. 23 are achieved.

FIG. 23 is a diagram depicting a functional configuration of the information processing system 1f as an example of the sixth embodiment.

As illustrated in this FIG. 23, the master server 10-0 achieves the function as the training management unit 201f, and the slave servers 10-0 to 10-n each achieve the function as the training processing unit 200f.

Furthermore, hereinafter, in the drawing, similar parts to the aforementioned parts are denoted by the same reference signs as those of the aforementioned parts, and thus detailed description thereof will be omitted.

The training management unit 201f manages data parallel training of the machine learning models by the plurality of slave servers 10. For example, the training management unit 201f sets a threshold value for determining whether or not to skip the reading of the mini-batch by some slave servers 10.

The training management unit 201f causes learning to be performed without skipping the reading of the mini-batch until an epoch at a predetermined number of times (k-th time) after the start of training in machine learning.

Then, the training management unit 201f calculates the training efficiency when all (n) processors are used at the end of the k-th epoch. Furthermore, the training management unit 201f calculates the training efficiency when m (m < n) processors obtained by excluding a predetermined proportion of processors from the n processors are used. Note that the training efficiency may be, for example, the magnitude of the norm of a difference between the weight error gradient vectors.

In addition, the training management unit 201f computes, for all the processors 13, a difference between the training efficiency when training the machine learning model using all the processors 13 and the training efficiency when training the machine learning model by excluding only one particular processor 13. The training management unit 201f computes, for each processor 13 of the slave server 10, the difference between the training efficiency when training the machine learning model using all the processors 13 (all-processor training efficiency; first training efficiency) and the training efficiency when training the machine learning model by excluding the processor 13 (partial processor training efficiency; second training efficiency).

Then, when the difference between the computed all-processor training efficiency and partial processor training efficiency falls below a predetermined threshold value, the training management unit 201f designates the processor 13 (particular processor) excluded when calculating the partial processor training efficiency, as a skip target processor.

The training management unit 201f causes the skip target processor to skip reading all mini-batches in the following epoch. This suppresses the reading of the mini-batch by the skip target processor.

The training management unit 201f notifies the slave servers 10 of the skip target processor.

The training processing unit 200f achieves a learning process (training process) in machine learning using the training data. For example, the server 10 functions as a training device that trains the machine learning model by the function as the training processing unit 200f.

The training processing unit 200f may achieve the training process in machine learning using the training data (teacher data) to which a correct answer label is attached, similarly to the training processing unit 200a of the information processing system 1a of the first embodiment.

As illustrated in FIG. 23, the training processing unit 200f includes a mini-batch management unit 202f, a training execution unit 203, and the training efficiency calculation unit 205.

The mini-batch management unit 202f manages a mini-batch used by the training execution unit 203 to train the machine learning model.

The mini-batch management unit 202f sets a mini-batch used by each processor 13 to train the machine learning model in accordance with an instruction from the training management unit 201f.

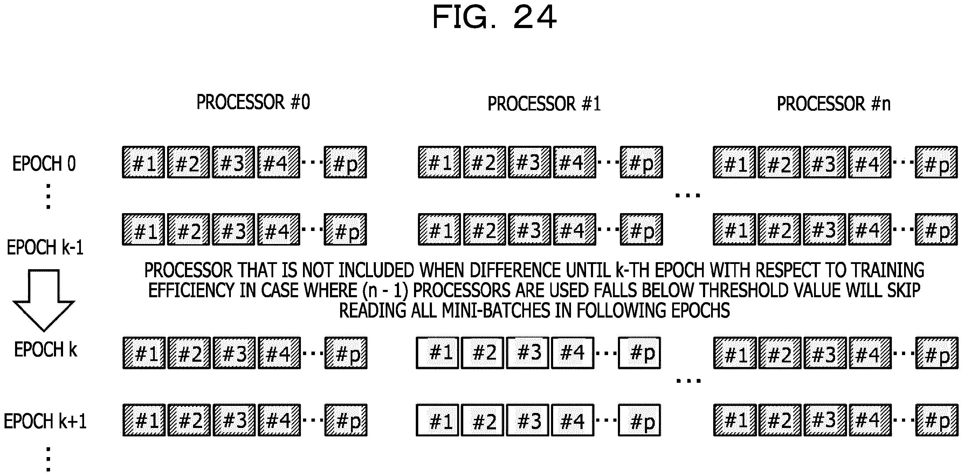

FIG. 24 is a diagram for explaining mini-batch skip control by the mini-batch management unit 202f in the information processing system 1f as an example of the sixth embodiment.

In this example illustrated in FIG. 24, an example in which processors #0 to #n each have p mini-batches is illustrated.

In the example illustrated in FIG. 24, all the processors #0 to #n are caused to read the mini-batch without skipping from the epoch 0 to the epoch k-1.

Furthermore, it is assumed that the training management unit 201f designates the processor #1 to be the skip target processor and notifies the mini-batch management unit 202f of the designated skip target processor at a time point when the epoch k-1 ends.

In the epoch k, the mini-batch management unit 202f causes the processor #1, which is the skip target processor, to skip reading all the mini-batches in all the following epochs. Note that, when some conditions are satisfied, the skip of the mini-batch in the processor may be canceled.

As described above, according to the information processing system 1f as an example of the sixth embodiment, in machine learning using SGD, the training execution unit 203 causes the skip target processor to skip reading all the mini-batches in all the following epochs. This allows the execution of processing by the skip target processor to be suppressed and the power consumption to be reduced.

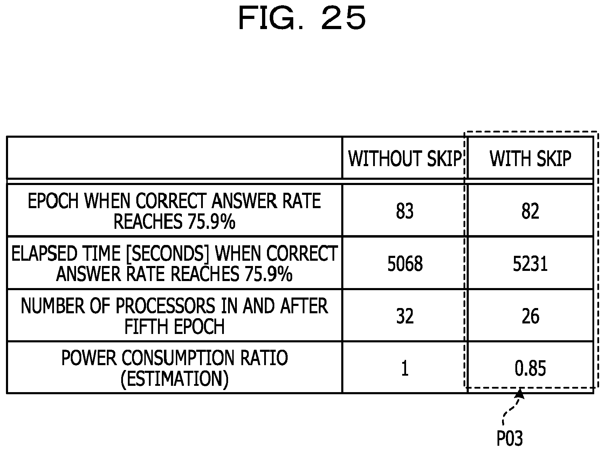

FIG. 25 is a diagram for explaining an effect of training of a machine learning model performed by the information processing system 1f as an example of the sixth embodiment.

This FIG. 25 also depict simulation results in the case of application to the training of a machine learning model that classifies ImageNet images using ResNet-50 v1.5, similarly to the simulation results depicted in FIG. 7 for the second embodiment.

In FIG. 25, an epoch when the correct answer rate reaches 75.9%, an elapsed time (seconds) when the correct answer rate reaches 75.9%, and the number of processors and power consumption ratio (estimation) in and after the fifth epoch in a case where the number of operating processors is reduced by causing six processors to skip reading the mini-batch in and after the fifth epoch are illustrated (refer to the reference sign P03 in FIG. 25).

Furthermore, for comparison, FIG. 25 also illustrates a case where the skip of reading the mini-batch is suppressed even in and after the fifth epoch.

In FIG. 25, an example in which a threshold value for skipping reading the mini-batch is defined using the norm of a difference in the weight error gradient vector between when using 32 processors and when using 24 processors obtained by excluding 25% of all the processors is illustrated.

The norm of the difference in the weight error gradient vector between when using 32 processors and when using 24 processors can be expressed by following formula (1).

$$\|\Delta w_{32} - \Delta w_{24}\| \ \ldots \ (1)$$

Here, $\Delta w_{32}$ denotes the weight error gradient vector when using 32 processors, and $\Delta w_{24}$ denotes the weight error gradient vector when using 24 processors.

Furthermore, in this FIG. 25, at a time point when the fourth epoch ends, the norm of the difference between the weight error gradient vector when all the processors 13 are used and the weight error gradient vector when only the processor 13 is excluded is worked out for each processor 13, and the processor 13 excluded when the magnitude of the norm falls below the threshold value defined above is caused to skip reading all mini-batches in the following epochs.

In this manner, it can be seen that a reduction by 15% in the power consumption was enabled by reducing the number of processors 13 that read the mini-batch in and after the fifth epoch.

(VII) Others

Each configuration and each process of the present embodiments may be selected or omitted as needed or may be appropriately combined.

Then, the disclosed technique is not limited to the above-described embodiments, and various modifications may be made and implemented without departing from the spirit of the present embodiments.

For example, in each of the above-described embodiments, for convenience, an example in which each server 10 includes one CPU 13 (processor) is illustrated, but the embodiments are not limited to this example. Each server 10 may include a plurality of CPUs 13 (processors), and each of this plurality of processors 13 may be used to train the machine learning model.

Furthermore, in the above-described embodiments, the CPU 13 of each server 10 achieves the functions as the training processing units 200a to 200f and the training management units 201c to 201f, but the embodiments are not limited to this.

For example, in each server 10, the accelerators 20-0 to 20-q may be used as, for example, artificial intelligence (AI) accelerators to achieve an arithmetic process related to machine learning. For example, each accelerator 20 may be caused to execute at least a part of the functions of the training processing units 200a to 200f and the training management units 201c to 201f.

In addition, in each of the above-described embodiments, an example in which machine learning is performed using the SGD method has been illustrated, but the embodiments are not limited to this example. For example, other algorithms such as Adam, Adagrad, Adadelta, and Nesterov accelerated gradient may be applied and may be applied to various kinds of machine learning that uses a backpropagation process.

Besides, the present embodiments may be implemented and manufactured by those skilled in the art according to the disclosure described above.

**Claims**

1. A machine learning program that causes at least one computer to execute a process, the process comprising:

   training a machine learning model by using a backpropagation process; and
   skipping reading a first mini-batch in a first epoch among a plurality of mini-batches that are created by dividing training data.

2. The machine learning program according to claim 1, wherein the process further comprising
   skipping reading a second mini-batch in a second epoch.

3. The machine learning program according to claim 1 or 2, wherein the process comprising
   when the training includes using a plurality of processors to train parallelly, causing the plurality of processors to skip reading the first mini-batch at a same timing.

4. The machine learning program according to any preceding claim, wherein the process further comprising
   when the training includes using a plurality of processors to train parallelly, causing one of the plurality of processors with a lower processing speed to skip reading a greater number of mini-batches than others of the plurality of processors according to respective processing speeds of the plurality of processors.

5. The machine learning program according to any preceding claim, wherein the process further comprising:

   acquiring a degree of training influence on the machine learning for each of the mini-batches in the first epoch by calculating; and
   preferentially skipping reading a mini-batch whose degree of training influence is low.

6. The machine learning program according to claim 3 or 4, wherein the process further comprising:

   acquiring a difference between a first training efficiency when training the machine learning model by using all of the plurality of processors and a second training efficiency when training the machine learning model by using other ones of the processors excluded one processor from the plurality of processors; and
   skipping reading mini-batches by the one particular processor when the difference falls below a threshold value.

7. A machine learning method for a computer to execute a process comprising:

   training a machine learning model by using a backpropagation process; and
   skipping reading a first mini-batch in a first epoch among a plurality of mini-batches that are created by dividing training data.

8. The machine learning method according to claim 7, wherein the process further comprising
   skipping reading a second mini-batch in a second epoch.

9. The machine learning method according to claim 7 or 8, wherein the process comprising
   when the training includes using a plurality of processors to train parallelly, causing the plurality of processors to skip reading the first mini-batch at a same timing.

10. The machine learning method according to any of claims 7 to 9, wherein the process further comprising
    when the training includes using a plurality of processors to train parallelly, causing one of the plurality of processors with a lower processing speed to skip reading a greater number of mini-batches than others of the plurality of processors according to respective processing speeds of the plurality of processors.

11. The machine learning method according to any of claims 7 to 10, wherein the process further comprising:

    acquiring a degree of training influence on the machine learning for each of the mini-batches in the first epoch by calculating; and
    preferentially skipping reading a mini-batch whose degree of training influence is low.

12. The machine learning method according to claim 9 or 10, wherein the process further comprising:

    acquiring a difference between a first training efficiency when training the machine learning model by using all of the plurality of processors and a second training efficiency when training the machine learning model by using other ones of the processors excluded one processor from the plurality of processors; and
skipping reading mini-batches by the one particular processor when the difference falls below a threshold value.

13. An information processing device, comprising:

a training execution unit configured to train a machine learning model by using a backpropagation process; and
a mini-batch management unit coupled to the training execution unit and configured to skip reading a first mini-batch in a first epoch among a plurality of mini-batches that are created by dividing training data.

# FIG. 1

# FIG. 2

10-0 TO 10-n (10)

TRAINING PROCESSING UNIT 200a

MINI-BATCH MANAGEMENT UNIT 202a

MINI-BATCH MANAGEMENT INFORMATION 211

TRAINING EXECUTION UNIT 203

1a

# FIG. 3

| EPOCH 0 | MINI-BATCH | T | 2 | 3 | 4 | 5 | ・・・ | p |
|---|---|---|---|---|---|---|---|---|
| | SKIP TARGET | 1 | 0 | 0 | 0 | 0 | | 0 |

| EPOCH 1 | MINI-BATCH | 1 | 2 | 3 | 4 | 5 | ・・・ | p |
|---|---|---|---|---|---|---|---|---|
| | SKIP TARGET | 0 | 1 | 0 | 0 | 0 | | 0 |

| EPOCH 2 | MINI-BATCH | 1 | 2 | 3 | 4 | 5 | ・・・ | p |
|---|---|---|---|---|---|---|---|---|
| | SKIP TARGET | 0 | 0 | 1 | 0 | 0 | | 0 |

211

# FIG. 4

EP 4 050 521 A1

MINI-BATCH FOR WHICH
READING IS TO BE SKIPPED

EPOCH 0    | #1 | #2 | #3 | #4 | ・・・ | #p |

EPOCH 1    | #1 | #2 | #3 | #4 | ・・・ | #p |

EPOCH 2    | #1 | #2 | #3 | #4 | ・・・ | #p |

# FIG. 5

```
                        ┌──────────┐
                        │  START   │
                        └──────────┘
                             │
                             ▼
A1 ──┌────────────────────────────────────────────┐◄─────────┐
     │   REPEAT FOR RESPECTIVE EPOCHS IN SEQUENCE  │          │
     └────────────────────────────────────────────┘          │
                             │                                │
                             ▼                                │
A2 ──┌────────────────────────────────────────────┐          │
     │      SELECT SKIP TARGET MINI-BATCH          │          │
     └────────────────────────────────────────────┘          │
                             │                                │
                             ▼                                │
A3 ──┌────────────────────────────────────────────┐◄──────┐  │
     │ REPEAT FOR RESPECTIVE MINI-BATCHES IN SEQUENCE      │  │
     └────────────────────────────────────────────┘       │  │
                             │                             │  │
                             ▼                             │  │
A4 ──◄          IS MINI-BATCH SKIP TARGET?      ►── YES ───┤  │
                             │                             │  │
                            NO                             │  │
                             ▼                             │  │
A5 ──┌────────────────────────────────────────────┐       │  │
     │             READ MINI-BATCH                 │       │  │
     └────────────────────────────────────────────┘       │  │
                             │                             │  │
                             ▼                             │  │
A6 ──┌────────────────────────────────────────────┐       │  │
     │           TRAINING PROCESS                  │       │  │
     │   (FORWARD, BACKWARD, AND UPDATE)           │       │  │
     └────────────────────────────────────────────┘       │  │
                             │                             │  │
                             ▼                             │  │
A7 ──┌────────────────────────────────────────────┐───────┘  │
     │   REPEAT UNTIL COMPLETING READING           │          │
     │        ALL MINI-BATCHES                     │          │
     └────────────────────────────────────────────┘          │
                             │                                │
                             ▼                                │
A8 ──┌────────────────────────────────────────────┐──────────┘
     │ REPEAT UNTIL TRAINING CONVERGENCE OR        │
     │    SPECIFIED NUMBER OF EPOCHS               │
     └────────────────────────────────────────────┘
                             │
                             ▼
                        ┌──────────┐
                        │   END    │
                        └──────────┘
```

# FIG. 6

PROCESSOR #0    PROCESSOR #1    PROCESSOR #2

EPOCH 0   #1 #2 #3 #4 ··· #p    #1 #2 #3 #4 ··· #p    #1 #2 #3 #4 ··· #p

EPOCH 1   #1 #2 #3 #4 ··· #p    #1 #2 #3 #4 ··· #p    #1 #2 #3 #4 ··· #p

EPOCH 2   #1 #2 #3 #4 ··· #p    #1 #2 #3 #4 ··· #p    #1 #2 #3 #4 ··· #p

# FIG. 7

|  | 0% SKIP | 12.5% SKIP | 25% SKIP | 50% SKIP |
|---|---|---|---|---|
| CORRECT ANSWER RATE (Top 1) WHEN CORRECT ANSWER RATE REACHES 75.9% | 76.12 | 76.47 | 75.97 | (74.79) |
| EPOCH WHEN CORRECT ANSWER RATE REACHES 75.9% | 85 | 84 | 84 | (89) |
| ELAPSED TIME [SECONDS] WHEN CORRECT ANSWER RATE REACHES 75.9% | 4612 | 4472 | 4177 | (3819) |

FIG. 8

FIG. 9

FIG. 10

EP 4 050 521 A1

# FIG. 11

10-0~10-n (10)

TRAINING PROCESSING UNIT — 200c

10-0

TRAINING
MANAGEMENT UNIT

201c

NUMBER OF SKIP
MINI-BATCHES

MINI-BATCH
MANAGEMENT UNIT — 202c

MINI-BATCH MANAGEMENT
INFORMATION — 211

TRAINING EXECUTION
UNIT — 203

1c

# FIG. 12

EP 4 050 521 A1

# FIG. 13

| | 0% SKIP | 25% SKIP | 50% SKIP | 25%→50% SKIP |
|---|---|---|---|---|
| CORRECT ANSWER RATE (Top 1) WHEN CORRECT ANSWER RATE REACHES 75.9% | 76.12 | 76.95 | (74.79) | 75.98 |
| EPOCH WHEN CORRECT ANSWER RATE REACHES 75.9% | 85 | 84 | (89) | 87 |
| ELAPSED TIME [SECONDS] WHEN CORRECT ANSWER RATE REACHES 75.9% | 4612 | 4177 | (3819) | 4042 |

P02

P01

EP 4 050 521 A1

## FIG. 14

Legend:
- A : ●—— baseline
- C : ·····○····· skip data 25%
- D : – ○– skip data 50%
- F : ——○· skip data 25%(0-44) 50%(45-89)
- E : ——75.90%

X-axis: Elapsed time [sec]
Y-axis: Top1 accuracy [%]

# FIG. 15

EP 4 050 521 A1

# FIG. 16

EP 4 050 521 A1

# FIG. 17

EP 4 050 521 A1

10-0～10-n (10)

**TRAINING PROCESSING UNIT** — 200d

10-0

TRAINING MANAGEMENT UNIT
201d

NUMBER OF SKIP MINI-BATCHES →

| |
|---|
| MINI-BATCH MANAGEMENT UNIT — 202d |
| MINI-BATCH MANAGEMENT INFORMATION — 211 |
| TRAINING EXECUTION UNIT — 203 |
| PROCESSING SPEED CALCULATION UNIT — 204 |

1d

# FIG. 18

PROCESSOR #0

EPOCH 0 | #1 | #2 | #3 | #4 | #5 | ··· | #p |

p

IN CASE WHERE RATIO OF PROCESSING SPEEDS
BETWEEN SERVERS #0, #1, AND #2 IN PREVIOUS
EPOCH WAS (p - 1) : (p - 3) : (p - 2) WHEN EACH
SERVER HAS p MINI-BATCHES

PROCESSOR #1

EPOCH 0 | #1 | #2 | #3 | #4 | #5 | ··· | #p |

p

PROCESSOR #2

EPOCH 0 | #1 | #2 | #3 | #4 | #5 | ··· | #p |

p

EPOCH 1 | #1 | #2 | #3 | #4 | #5 | ··· | #p | | #1 | #2 | #3 | #4 | #5 | ··· | #p | | #1 | #2 | #3 | #4 | #5 | ··· | #p |

EP 4 050 521 A1

# FIG. 19

START

A1 — REPEAT FOR RESPECTIVE EPOCHS IN SEQUENCE

A2 — SELECT SKIP TARGET MINI-BATCH

A3 — REPEAT FOR RESPECTIVE MINI-BATCHES IN SEQUENCE

A4 — IS MINI-BATCH SKIP TARGET?    YES

NO

A5 — READ MINI-BATCH

A6 — TRAINING PROCESS
(FORWARD, BACKWARD, AND UPDATE)

A7 — REPEAT UNTIL COMPLETING READING ALL MINI-BATCHES

A71 — COMPUTE PROCESSING SPEED OF OWN PROCESSOR

A8 — REPEAT UNTIL TRAINING CONVERGENCE OR
SPECIFIED NUMBER OF EPOCHS

END

# FIG. 20

PROCESSING SPEED CALCULATION UNIT ⌐204

10-0~10-n

TRAINING MANAGEMENT UNIT ⌐10-0

201e

NUMBER OF SKIP MINI-BATCHES →

TRAINING PROCESSING UNIT ⌐200e

MINI-BATCH MANAGEMENT UNIT ⌐202e

TRAINING EXECUTION UNIT ⌐203

PROCESSING SPEED CALCULATION UNIT ⌐204

TRAINING EFFICIENCY CALCULATION UNIT ⌐205

1e

EP 4 050 521 A1

# FIG. 21

PROCESSOR #0                          PROCESSOR #1                          PROCESSOR #2

COMPUTE DIFFERENCE IN LOSS
IN EACH MINI-BATCH

EPOCH 0   | #1 | #2 | #3 | #4 | ··· | #p |    | #1 | #2 | #3 | #4 | ··· | #p |    | #1 | #2 | #3 | #4 | ··· | #p |

SKIP FIXED PROPORTION OF MINI-BATCHES THAT HAD SMALL INFLUENCE ON TRAINING EFFICIENCY IN PRECEDING
EPOCH, IN EACH PROCESSOR (WHEN THERE IS NO DIFFERENCE IN PROCESSING SPEED BETWEEN RESPECTIVE
PROCESSORS, EQUALIZE NUMBER OF MINI-BATCHES TO BE SKIPPED BETWEEN RESPECTIVE PROCESSORS)

EPOCH 1   | #1 | #2 | #3 | #4 | ··· | #p |    | #1 | #2 | #3 | #4 | ··· | #p |    | #1 | #2 | #3 | #4 | ··· | #p |

EPOCH 2   | #1 | #2 | #3 | #4 | ··· | #p |    | #1 | #2 | #3 | #4 | ··· | #p |    | #1 | #2 | #3 | #4 | ··· | #p |

EP 4 050 521 A1

# FIG. 22

```
                    ┌─────────┐
                    │  START  │
                    └─────────┘
                         │
                         ▼
A1 ──┐  REPEAT FOR RESPECTIVE EPOCHS IN SEQUENCE  ◄──────┐
                         │                                │
                         ▼                                │
A2 ──┐       SELECT SKIP TARGET MINI-BATCH               │
                         │                                │
                         ▼                                │
A3 ──┐  REPEAT FOR RESPECTIVE MINI-BATCHES IN SEQUENCE ◄─┼──┐
                         │                                │  │
                         ▼                                │  │
A4 ──┐      IS MINI-BATCH SKIP TARGET?   ──── YES ───────┼──┤
                         │                                │  │
                        NO                                │  │
                         ▼                                │  │
A5 ──┐            READ MINI-BATCH                         │  │
                         │                                │  │
                         ▼                                │  │
A6 ──┐          TRAINING PROCESS                          │  │
             (FORWARD, BACKWARD, AND UPDATE)              │  │
                         │                                │  │
                         ▼                                │  │
A61 ─┐  COMPUTE TRAINING EFFICIENCY (E.G., MAGNITUDE      │  │
                OF WEIGHT ERROR GRADIENT                  │  │
                         │                                │  │
                         ▼                                │  │
A7 ──┐  REPEAT UNTIL COMPLETING READING ALL MINI-BATCHES ─┼──┘
                         │                                │
                         ▼                                │
A71 ─┐  COMPUTE PROCESSING SPEED OF EACH PROCESSOR        │
                         │                                │
                         ▼                                │
A8 ──┐   REPEAT UNTIL TRAINING CONVERGENCE OR            │
            SPECIFIED NUMBER OF EPOCHS  ──────────────────┘
                         │
                         ▼
                    ┌─────────┐
                    │   END   │
                    └─────────┘
```

# FIG. 23

TRAINING MANAGEMENT UNIT — 201f (10-0)

NUMBER OF SKIP MINI-BATCHES

TRAINING PROCESSING UNIT — 200f
10-0~10-n (10)

MINI-BATCH MANAGEMENT UNIT — 202f

TRAINING EXECUTION UNIT — 203

TRAINING EFFICIENCY CALCULATION UNIT — 205

1f

EP 4 050 521 A1

# FIG. 24

PROCESSOR #0                    PROCESSOR #1                    PROCESSOR #n

EPOCH 0        #1 #2 #3 #4 ···#p        #1 #2 #3 #4···#p        #1 #2 #3 #4···#p

EPOCH k-1      #1 #2 #3 #4 ···#p        #1 #2 #3 #4···#p        #1 #2 #3 #4···#p

PROCESSOR THAT IS NOT INCLUDED WHEN DIFFERENCE UNTIL k-TH EPOCH WITH RESPECT TO TRAINING
EFFICIENCY IN CASE WHERE (n - 1) PROCESSORS ARE USED FALLS BELOW THRESHOLD VALUE WILL SKIP
READING ALL MINI-BATCHES IN FOLLOWING EPOCHS

EPOCH k        #1 #2 #3 #4 ···#p        #1 #2 #3 #4··· #p        #1 #2 #3 #4···#p

EPOCH k+1      #1 #2 #3 #4 ···#p        #1 #2 #3 #4··· #p        #1 #2 #3 #4···#p

# FIG. 25

|  | WITHOUT SKIP | WITH SKIP |
|---|---|---|
| EPOCH WHEN CORRECT ANSWER RATE REACHES 75.9% | 83 | 82 |
| ELAPSED TIME [SECONDS] WHEN CORRECT ANSWER RATE REACHES 75.9% | 5068 | 5231 |
| NUMBER OF PROCESSORS IN AND AFTER FIFTH EPOCH | 32 | 26 |
| POWER CONSUMPTION RATIO (ESTIMATION) | 1 | 0.85 |

P03

Europäisches
Patentamt
European
Patent Office
Office européen
des brevets

# EUROPEAN SEARCH REPORT

Application Number

EP 21 20 5756

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHIRAHATA KOICHI ET AL: "Preliminary Performance Analysis of Distributed DNN Training with Relaxed Synchronization", IEICE TRANSACTIONS ON ELECTRONICS, [Online] vol. E104.C, no. 6, 1 December 2020 (2020-12-01), pages 257-260, XP055914615, Tokyo, JP. ISSN: 0916-8524, DOI: 10.1587/transele.2020LHS0001 Retrieved from the Internet: URL:https://search.ieice.org/bin/pdf_link.php?category=C&lang=E&year=2021&fname=e104-c_6_257&abst=> [retrieved on 2022-04-21] * abstract * * page 257 - page 259; table 4 * ----- | 1-13 | INV. G06N3/04 G06N3/08 |
| A | JO JOONGHO ET AL: "Confidence Score based Mini-batch Skipping for CNN Training on Mini-batch Training Environment", 2020 INTERNATIONAL SOC DESIGN CONFERENCE (ISOCC), [Online] 21 October 2020 (2020-10-21), pages 129-130, XP055914619, DOI: 10.1109/ISOCC50952.2020.9332956 ISBN: 978-1-7281-8331-2 Retrieved from the Internet: URL:https://ieeexplore.ieee.org/stampPDF/getPDF.jsp?tp=&arnumber=9332956&ref=aHR0cHM6Ly9pZWVleHBsb3JlLmllZWUub3JnL2Fic3RyYWN0L2RvY3VtZW50LzkzMzI5NTY=> [retrieved on 2022-04-21] * the whole document * ----- | 1-13 | TECHNICAL FIELDS SEARCHED (IPC) G06N |

The present search report has been drawn up for all claims

| Place of search | Date of completion of the search | Examiner |
|---|---|---|
| The Hague | 22 April 2022 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 4 050 521 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018190140 A
- JP 2018018422 A
- WO 2020008642 A